# EUROPEAN PATENT SPECIFICATION

(11) **EP 1 657 286 B1**
(45) Date of publication and mention of the grant of the patent: **04.07.2018**
(21) Application number: 05024674.3
(22) Date of filing: 11.11.2005
(51) Int. Cl.: C09D 11/10, C09D 11/00

(54) **Radiation curable ink jet ink, comprising a polymerisation initiation sensitising dye**
Strahlungshärtbare Tintenstrahltinte, einen Farbstoff zur Sensibilisierung der Initierung der Polymerisation enthaltend
Encre pour l'impression par jet d'encre durcissable par rayonnement comprenant un colorant pour sensibiliser l'initiation de polymérisation

(30) Priority: 12.11.2004 JP 2004329435; 08.03.2005 JP 2005064636; 08.03.2005 JP 2005064637
(43) Date of publication of application: 17.05.2006
(73) Proprietor: FUJIFILM Corporation, Minato-ku Tokyo (JP)
(72) Inventor: Tsuchimura, Tomotaka, Yoshida-cho Haibara-gun Shizuoka-ken (JP); Kunita, Kazuto, Yoshida-cho Haibara-gun Shizuoka-ken (JP)
(74) Representative: Hoffmann Eitle

(56) References cited:
- US-A- 5 250 384
- DATABASE WPI Week 200481 Thomson Scientific, London, GB; AN 2004-816043 XP002502905 & JP 2004 302207 A (FUJI PHOTO FILM CO LTD) 28 October 2004 (2004-10-28)
- DATABASE WPI Week 200413 Thomson Scientific, London, GB; AN 2004-125843 XP002502906 & JP 2003 192943 A (KONICA CORP) 9 July 2003 (2003-07-09)

## Description

### BACKGROUND OF THE INVENTION

### Field of the Invention

The present invention relates to an inkjet recording ink and a method of producing a planographic printing plate using the same. In detail, it relates to an inkjet recording ink which has a high sensitivity to radiation irradiation, a capability of forming a high quality image, and an excellent storage stability, and a method of producing a planographic printing plate which does not require development processing, with a high printing durability and a capability of forming a high quality image. Furthermore, the present invention relates to: an ink composition which is suitably used for inkjet recording; an inkjet recording method; a printed material using the same; further a planographic printing plate obtained by using the ink; and a method of producing the planographic printing plate. In more detail, it relates to: an ink composition which is curable with a high sensitivity to radiation irradiation, and which is capable of forming a high quality image, and has an excellent storage stability being suitable for inkjet recording; an inkjet recording method; a printed material using the same; a planographic printing plate obtained by using the ink; and a method of producing the planographic printing plate.

### Description of the Related Art

As an image recording method for forming an image on a support such as a paper, based on an image data signal, there are an electrographic method, dyesublimation and thermal wax transfer methods, and an inkjet method. Among these, the inkjet method is feasible using a low cost device, wherein the image is directly formed by ejecting an ink only on a necessary image area on the support. Therefore the ink can be efficiently used and the running cost is low. Furthermore, the inkjet method is superior from the point of simplicity of the device, and a low degree of noise.

In the inkjet image recording method, in order to fix the ejected ink on the support, there are employed a method of removing a solvent by drying the ink in the air, and a method of using an ink which is curable by irradiation of radiation such as ultraviolet rays. Among these, as one of such inkjet image recording methods, there is a method of using an ink which is curable by irradiation of radiation such as ultraviolet rays (radiation curable inkjet recording ink) so as to fix the ink on the support. Such an inkjet recording ink which is curable by irradiation of radiation such as ultraviolet rays used in the method is known to have features of relatively less odor, quick-drying property, less bleeding even on a support (for example, a plastic sheet or a metal plate) with less ink absorbency and normally being difficult for direct recording, and a capability of obtaining a highly adhesive image with high sensitivity (for example, refer to Japanese Unexamined Patent Publication No. S63-235382, Japanese Unexamined Patent Publication No. H03-216379, Japanese Unexamined Patent Publication No. H05-214280, Japanese Examined Patent Publication No. H06-21256, and Japanese Examined Patent Publication No. H06-62905).

Moreover, in addition to the above features, with the object of providing a highly safe inkjet recording ink which is less irritative or sensitizing to the skin, there is proposed a composition containing polymerizable compounds comprising specific radical polymerizable acrylate compounds, and colorants (for example, refer to Japanese Unexamined Patent Publication No. 2003-192943 and Japanese Unexamined Patent Publication No. 2003-192944).

If such a radiation curable inkjet recording ink is employed, it is required to improve the sensitivity to radiation, and the quality of the image formed by the fixed ink. The reason is that sufficiently high sensitivity to radiation contributes to a lot of advantages such as high curability, decrease in the power consumption of the radiation source, longer life due to the decrease in the load on the radiation source, and prevention of generation of low-molecular substances caused by insufficient curing. Moreover, by achieving an improvement in the sensitivity, particularly when forming the image area on a planographic printing plate for offset printing using the inkjet recording ink, the curing strength of the image area is improved, and a planographic printing plate with a high printing durability can be obtained.

Generally, as a method of improving the sensitivity to radiation in the radiation curable polymerizable compounds, a variety of methods using photoinitiation systems are disclosed (for example, refer to Bruce M. Monroe, et al., Chemical Revue, Vol. 93 (1993), pp. 435-448). However, there has been no precedent in which a polymerization initiation system satisfying the sufficient sensitivity and storage stability for scanning exposure is employed in an inkjet recording ink. Moreover, there is no known usage of a radiation curable inkjet recording ink satisfying the high printing durability, formation of a high quality image, and the storage stability, for the planographic printing plate. Furthermore, the radiation curable ink composition requires compatibility with a recording medium such as a substrate, however such a radiation curable ink composition satisfying the requirement has not yet been provided.

Recently, as an active ray curable ink, there is reported a system wherein a sensitizer is combined in a cation polymerization initiation system so as to improve the sensitivity (for example, refer to Japanese Unexamined Patent Publication No. 2004-91556). Moreover, there is a proposed an inkjet curing system wherein a light emitting diode is used as an irradiation light source, instead of a conventional high-pressure mercury-vapor lamp or a xenon lamp (for example, refer to Japanese Unexamined Patent Publication No. 2004-181951). However, in reality, no radiation curable ink composition which is durable for practical use and with high sensitivity has been developed yet.

JP 2004 302207 A relates to a photosensitive composition which can be used as a material of a lithographic printing plate for scanning exposure, adaptable for a CTP system and having high sensitivity to the oscillation wavelength of an inexpensive shortwave semiconductor laser, and which uses a photopolymerization initiating system having high sensitivity to wavelengths in a wide range from 350 nm to 450 nm. The photosensitive composition contains: (i) a sensitizing dye having a structure expressed by general formula (1); (ii) an activator compound; and (iii) an addition polymerizable compound which reacts by a radical or an acid. 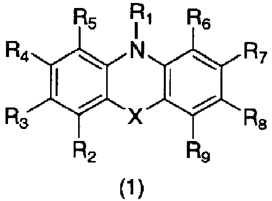 JP 2003 192943 relates to an ink for inkjet recording, The ink for inkjet recording is characterized in that it is curable by radiation, contains at least a coloring material and polymerizable compounds which comprise at least one compound selected from the group of specified acrylic compounds, and a polymerizable monomer or oligomer having a molecular weight of 400 or higher, and the total content of the polymerizable compounds is 50-95 mass% of the whole mass of the ink.
US 5,250,384 A relates to a light-sensitive heat-sensitive composition, comprising a photohardenable composition, a dye which discolors upon reacting with a base, and a base precursor. In a preferred embodiment, the dye is a spectral sensitizing dye for the photohardenable composition. Furthermore, an image formation process is disclosed, comprising the steps of: (a) imagewise exposing the light-sensitive heat-sensitive recording material to light to cure the exposed portions of the recording material; and (b) uniformly heating the imagewise exposed recording material to discolor the dye in the unexposed portions thereof. A second image formation process is disclosed, comprising the steps of: (a) imagewise heating the light-sensitive heat-sensitive recording material to discolor the dye in the heated portions of the recording material; and (b) uniformly exposing the imagewise heated recording material to light to cure the unheated portions thereof.

### SUMMARY OF THE INVENTION

The present invention has been made in consideration of the above situations. Firstly, the present invention provides an inkjet recording ink (inkjet recording ink composition) which has a high sensitivity to radiation of low output, a capability of forming a high quality image, and an excellent storage stability, and a method of producing a planographic printing plate which does not require development processing, with a high printing durability, and a capability of forming a high quality image.

As a result of intensive examination by the present inventors, it has been found that by using a specific sensitizing dye with a polymerization initiator gives an inkjet recording ink which has a high sensitivity to radiation irradiation of low output, a capability of forming a high quality image, and an excellent storage stability. Another finding is that application thereof to the planographic printing plate satisfies the high printing durability, the capability of forming a high quality image, and the storage stability.

A first aspect of the present invention provides an inkjet recording ink which is curable by radiation irradiation, comprising a colorant, a polymerizable compound, and a polymerization initiation system, wherein the polymerization initiation system contains a sensitizing dye represented by formula (XVIII), and a polymerization initiator.

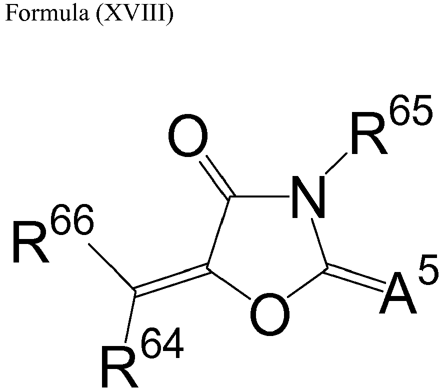

In formula (XVIII), R⁶⁶ represents an aromatic ring or a heterocyclic ring. A⁵ represents O, S, or NR⁶⁷. R⁶⁴, R⁶⁵, and R⁶⁷ each independently represent a monovalent nonmetal atomic group, or R⁶⁴, R⁶⁵, and R⁶⁷ represent nonmetal atomic groups selected from a hydrogen atom, a substituted or unsubstituted alkyl group, a substituted or unsubstituted alkenyl group, a substituted or unsubstituted aryl group, a substituted or unsubstituted heteroaromatic residue, a substituted or unsubstituted alkoxy group, a substituted or unsubstituted alkylthio group, a hydroxyl group, and a halogen atom, or R⁶⁴ and R⁶⁷, or R⁶⁵ and R⁶⁷ are nonmetal atomic groups that are bonded to each other to from an aliphatic or an aromatic ring.

A second aspect of the present invention provides a method for forming an image on a support, comprising:
(a) applying the inkjet recording ink according to the first aspect, onto the support; and
(b) curing the inkjet recording ink by irradiating the inkjet recording ink with radiation having a peak wavelength of 350 to 420 nm with an irradiation energy of not more than 2000 mJ/cm², to thereby form an image made from the cured ink on the support.

A third aspect of the present invention provides a method of producing a planographic printing plate having a support and an image formed on the support, the method comprising:
(1) ejecting the inkjet recording ink according to the first aspect onto the support; and
(2) curing the ink by irradiating radiation on the support having the ink ejected thereon, to form an image made from the cured ink on the support.

Furthermore, the present invention provides an ink composition which is curable with a high sensitivity to radiation irradiation, and is capable of forming a high quality image having excellent adhesiveness onto a recording medium, an inkjet recording method using the ink composition, and a printed material obtained by the inkjet recording method.

Moreover, the present invention provides a planographic printing plate with a high printing durability obtained by using the ink composition, and a method of producing the planographic printing plate.

### DETAILED DESCRIPTION OF THE INVENTION

### A. Inkjet recording ink and method of producing planographic printing plate using the ink

A first mode of the present invention relates to an inkjet recording ink which is curable by radiation ray irradiation, including a colorant, a polymerizable compound, and a polymerization initiation system, wherein the polymerization initiation system includes a polymerization initiator and a sensitizing dye. Hereunder is a detailed description of an inkjet recording ink of the first mode of the present invention (hereunder, called "inkjet recording ink of the present invention"), and a method of forming a planographic printing plate using the ink.

### (1) Polymerization initiation system

The inkjet recording ink of the present invention includes a polymerization initiation system. The polymerization initiation system includes a sensitizing dye, a polymerization initiator, and optionally other additives.

### (1-1) Sensitizing dye

The sensitizing dye included in the polymerization initiation system is represented by the following formula (XVIII).

### (1-1-1) Type of sensitizing dye

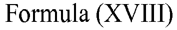

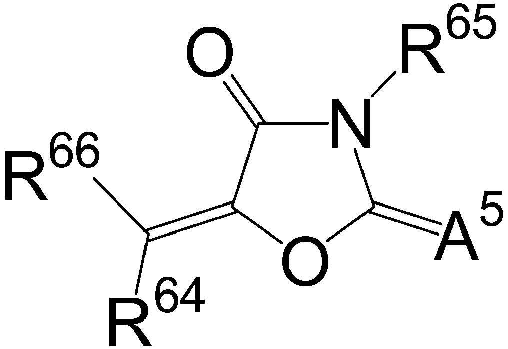

In the formula (XVIII), A⁵ represents O, S, or NR⁶⁷. R⁶⁴, R⁶⁵, and R⁶⁷ independently represent a monovalent nonmetal atomic group selected from a hydrogen atom, a substituted or unsubstituted alkyl group, a substituted or unsubstituted alkenyl group, a substituted or unsubstituted aryl group, a substituted or unsubstituted heteroaromatic residue, a substituted or unsubstituted alkoxy group, a substituted or unsubstituted alkylthio group, a hydroxyl group, and a halogen atom, or R⁶⁴ and R⁶⁷, or R⁶⁵ and R⁶⁷ are bonded to each other to form an aliphatic ring or an aromatic ring.

Preferred examples of the alkyl group include linear, branched, and cyclic alkyl groups having 1 to 20 carbon atoms. Specific examples include a methyl group, an ethyl group, a propyl group, a butyl group, a pentyl group, a hexyl group, a heptyl group, an octyl group, a nonyl group, a decyl group, an undecyl group, a dodecyl group, a tridecyl group, a hexadecyl group, an octadecyl group, an eicosyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group, a cyclohexyl group, a cyclopentyl group, and a 2-norbornyl group. Among these, more preferred are linear alkyl groups having 1 to 12 carbon atoms, branched alkyl groups having 3 to 12 carbon atoms, and cyclic alkyl groups having 5 to 10 carbon atoms.

As a substituent introducible into a substituted alkyl group, a monovalent nonmetal atomic group except for a hydrogen atom is used. Preferred examples include a halogen atom (-F, -Br, -Cl, and -I), a hydroxyl group, an alkoxy group, an aryloxy group, a mercapto group, an alkylthio group, an arylthio group, an alkyldithio group, an aryldithio group, an amino group, an N-alkylamino group, an N,N-dialkylamino group, an N-arylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkylsulfoxy group, an arylsulfoxy group, an acylthio group, an acylamino group, an N-alkylacylamino group, an N-arylacylamino group, an ureide group, an N'-alkylureide group, an N',N'-dialkylureide group, an N'-arylureide group, an N',N'-diarylureide group, an N'-alkyl-N'-arylureide group, an N-alkylureide group, an N-arylureide group, an N'-alkyl-N-alkylureide group, an N'-alkyl-N-arylureide group, an N',N'-dialkyl-N-alkylureide group, an N',N'-dialkyl-N-arylureide group, an N'-aryl-N-alkylureide group, an N'-aryl-N-arylureide group, an N',N'-diaryl-N-alkylureide group, an N',N'-diaryl-N-arylureide group, an N'-alkyl-N'-aryl-N-alkylureide group, an N'-alkyl-N'-aryl-N-arylureide group, an alkoxycarbonylamino group, an aryloxycarbonylamino group, an N-alkyl-N-alkoxycarbonylamino group, an N-alkyl-N-aryloxycarbonylamino group, an N-aryl-N-alkoxycarbonylamino group, an N-aryl-N-aryloxycarbonylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N,N-diarylcarbamoyl group, an N-alkyl-N-arylcarbamoyl group, an alkylsulfinyl group, an arylsulfinyl group, an alkylsulfonyl group, an arylsulfonyl group, a sulfo group (-SO₃H) and a conjugate base group thereof (hereunder, called a sulfonato group), an alkoxysulfonyl group, an aryloxysulfonyl group, a sulfinamoyl group, an N-alkylsulfinamoyl group, an N,N-dialkylsulfinamoyl group, an N-arylsulfinamoyl group, an N,N-diarylsulfinamoyl group, an N-alkyl-N-arylsulfinamoyl group, a sulfamoyl group, an N-alkylsulfamoyl group, an N,N-dialkylsulfamoyl group, an N-arylsulfamoyl group, an N,N-diarylsulfamoyl group, an N-alkyl-N-arylsulfamoyl group, a phosphono group (-PO₃H₂) and a conjugate base group thereof (hereunder, called a phosphonato group), a dialkylphosphono group (-PO₃(alkyl)₂), a diarylphosphono group (-PO₃(aryl)₂), an alkylarylphosphono group (-PO₃(alkyl)(aryl)), a monoalkylphosphono group (-PO₃H(alkyl)) and a conjugate base group thereof (hereunder, called an alkyphosphonato group), a monoarylphosphono group (-PO₃H(aryl)) and a conjugate base group thereof (hereunder, called an arylphosphonato group), a phosphonooxy group (-OPO₃H₂) and a conjugate base group thereof (hereunder, called a phosphonatooxy group), a dialkylphosphonooxy group (-OPO₃(alkyl)₂), a diarylphosphonooxy group (-OPO₃(aryl)₂), an alkylarylphosphonooxy group (-OPO₃(alkyl)(aryl)), a monoalkylphosphonooxy group (-OPO₃H(alkyl)) and a conjugate base group thereof (hereunder, called an alkylphosphonatooxy group), a monoarylphosphonooxy group (-OPO₃H(aryl)) and a conjugate base group thereof (hereunder, called an arylphosphonatooxy group), a cyano group, a nitro group, an aryl group, a heteroaryl group, an alkenyl group, and an alkinyl group.

Specific examples of the alkyl group in the substituents include the abovementioned alkyl groups. Specific examples of the aryl group include a phenyl group, a biphenyl group, a naphthyl group, a tolyl group, a xylyl group, a mesityl group, a cumenyl group, a chlorophenyl group, a bromophenyl group, a chloromethylphenyl group, a hydroxyphenyl group, a methoxyphenyl group, an ethoxyphenyl group, a phenoxyphenyl group, an acetoxyphenyl group, a benzoiloxyphenyl group, a methylthiophenyl group, a phenylthiophenyl group, a methylaminophenyl group, a dimethylaminophenyl group, an acetylaminophenyl group, a carboxyphenyl group, a methoxycarbonylphenyl group, an ethoxyphenylcarbonyl group, a phenoxycarbonylphenyl group, an N-phenylcarbamoylphenyl group, a phenyl group, a cyanophenyl group, a sulphophenyl group, a sulfonatophenyl group, a phosphonophenyl group, and a phosphonatophenyl group.

As the heteroaryl group, monocyclic or polycyclic aromatic rings having at least any one of nitrogen, oxygen, and sulfur atoms are used. Particularly preferred examples of the heteroaryl group include; thiophene, thianthrene, furan, pyran, isobenzofuran, chromene, xanthene, phenoxazine, pyrrole, pyrazole, isothiazole, isoxazole, pyrazine, pyrimidine, pyridazine, indolizine, isoindolizine, indoyl, indazole, purine, quinolidine, isoquinoline, phthalazine, naphthyridine, quinazoline, cinnoline, pteridine, carbazole, carboline, phenanthrene, acridine, perimidine, phenanthroline, phthalazine, phenarsazine, phenoxazine, furazne, and phenoxazine. These may be further benzo-fused or may further have a substituent.

Moreover, examples of the alkenyl group include; a vinyl group, a 1-propenyl group, a 1-butenyl group, a cinnamyl group, and a 2-chloro-1-ethenyl group. Examples of the alkynyl group include an ethynyl group, a 1-propynyl group, a 1-butynyl group, and a trimethylsilylethynyl group. Examples of G¹ in the acyl group (G¹CO-) include hydrogen and the abovementioned alkyl groups and aryl groups. Among the substituents, more preferred are a halogen atom (-F, -Br, -Cl, and -I), an alkoxy group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonato group, a sulfamoyl group, an N-alkylsulfamoyl group, an N,N-dialkylsulfamoyl group, an N-arylsulfamoyl group, an N-alkyl-N-arylsulfamoyl group, a phosphono group, a phosphonato group, a dialkylphosphono group, a diarylphosphono group, a monoalkylphosphono group, an alkyphosphonato group, a monoarylphosphono group, an arylphosphonato group, a phosphonooxy group, a phosphonatooxy group, an aryl group, and an alkenyl group.

Meanwhile, the alkylene group in the substituted alkyl group may include divalent organic residues resulting from elimination of any one of the hydrogen atoms on the abovementioned alkyl group having 1 to 20 carbon atoms. Preferred are linear alkylene groups having from 1 to 12 carbon atoms, branched alkylene groups having from 3 to 12 carbon atoms, and cyclic alkylene groups having from 5 to 10 carbon atoms.

Preferred specific examples of the substituted alkyl group as R⁶⁴, R⁶⁵ and R⁶⁷ obtained by combining the substituent with the alkylene group include; a chloromethyl group, a bromomethyl group, a 2-chloroethyl group, a trifluoromethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-oxoethyl group, a 2-oxopropyl group, a carboxypropyl group, a methoxycarbonylethyl group, an allyloxycarbonylbutyl group, a chloro-phenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatooxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propynyl group, a 2-butynyl group, and a 3-butynyl group.

Preferred specific examples of the aryl group as R⁶⁴, R⁶⁵, and R⁶⁷ include those in which 1 to 3 benzene rings form a fused ring, and those in which a benzene ring and a 5-membered unsaturated ring form a fused ring. Specific examples thereof include a phenyl group, a naphthyl group, an anthryl group, a phenanthryl group, an indenyl group, an acenaphthenyl group, and a fluorenyl group. Among these, more preferred are a phenyl group and a naphthyl group.

As a preferred specific example of the substituted aryl group as R⁶⁴, R⁶⁵, and R⁶⁷, those having a monovalent nonmetal atomic group except for a hydrogen atom as a substituent on the ring-forming carbon atom of the abovementioned aryl group are used. Preferred specific examples of the substituent include the abovementioned alkyl groups and substituted alkyl groups, and those shown as the substituent in the foregoing substituted alkyl group. Preferred specific examples of such substituted aryl groups include a biphenyl group, a tolyl group, a xylyl group, a mesityl group, a cumenyl group, a chlorophenyl group, a bromophenyl group, a fluorophenyl group, a chloromethylphenyl group, a trifluoromethylphenyl group, a hydroxyphenyl group, a methoxyphenyl group, a methoxyethoxyphenyl group, an allyloxyphenyl group, a phenoxyphenyl group, a methylthiophenyl group, a tolylthiophenyl group, an ethylaminophenyl group, a diethylaminophenyl group, a morpholinophenyl group, an acetyloxyphenyl group, a benzoyloxyphenyl group, an N-cyclohexylcarbamoyloxyphenyl group, an N-phenylcarbamoyloxyphenyl group, an acetylaminophenyl group, an N-methylbenzoylaminophenyl group, a carboxyphenyl group, a methoxycarbonylphenyl group, an allyloxycarbonylphenyl group, a chlorophenoxycarbonylphenyl group, a carbamoylphenyl group, an N-methylcarbamoylphenyl group, an N,N-dipropylcarbamoylphenyl group, an N-(methoxyphenyl)carbamoylphenyl group, an N-methyl-N-(sulfophenyl)carbamoylphenyl group, a sulphophenyl group, a sulfonatophenyl group, a sulfamoylphenyl group, an N-ethylsulfamoylphenyl group, an N,N-dipropylsulfamoylphenyl group, an N-tolylsulfamoylphenyl group, an N-methyl-N-(phosphonophenyl)sulfamoylphenyl group, a phosphonophenyl group, a phosphonatophenyl group, a diethylphosphonophenyl group, a diphenylphosphonophenyl group, a methylphosphonophenyl group, a methylphosphonatophenyl group, a tolylphosphonophenyl group, a tolylphosphonatophenyl group, an allylphenyl group, a 1-propenylmethylphenyl group, a 2-butenylphenyl group, a 2-methylallylphenyl group, a 2-methylpropenylphenyl group, a 2-propynylphenyl group, a 2-butynylphenyl group, and a 3-butynylphenyl group.

R⁶⁶ represents a substituted or unsubstituted aromatic ring or heterocyclic ring. The aromatic ring or heterocyclic ring that may have substituents is an organic compound having a ring structure. Atoms constituting the ring may include not only carbon atoms, but also O, S, N, and other heteroatoms. Specific examples thereof include structures described in "Yuki Kagobutsu Meimei no Tebiki (Guide to naming organic compounds)" (Kagakudojin) P27 to P40.

The sensitizing dyes represented by the formula (XVIII) of the present invention may be obtained by a condensation reaction between the abovementioned acid nuclei or acid nuclei having an active methylene group, and substituted or unsubstituted aromatic rings or heterocyclic rings, however they may be synthesized by referring to Japanese Examined Patent Publication No. S59-28329. Hereunder are preferred specific examples of compounds represented by the formula (XVIII). However, the present invention is not limited to these. Moreover, isomers with a double bond linking an acid nucleus and a basic nucleus are not clarified, and the present invention is not limited to any one of the isomers.

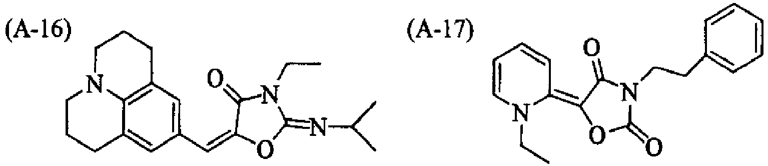

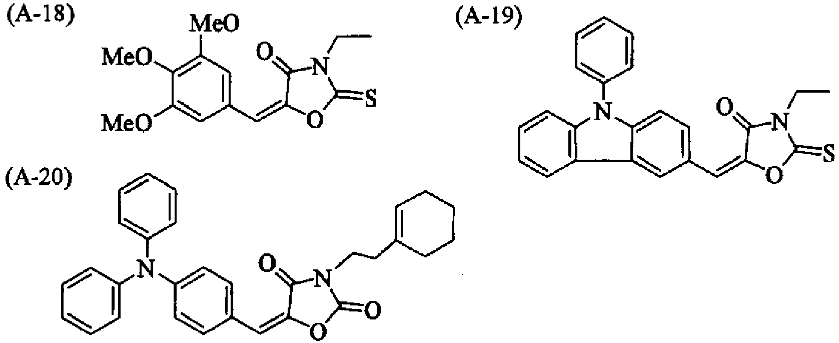

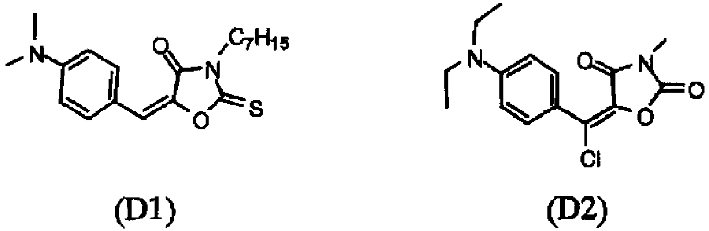

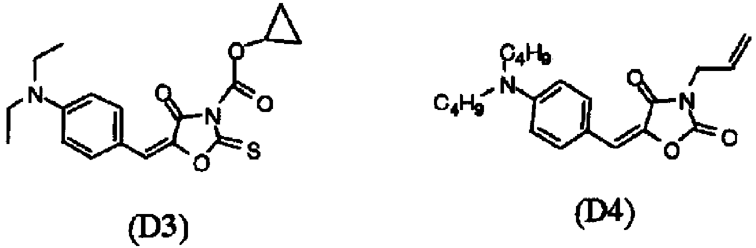

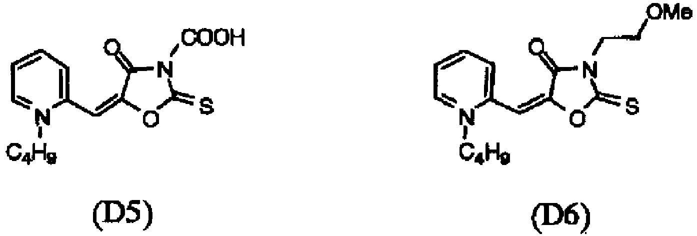

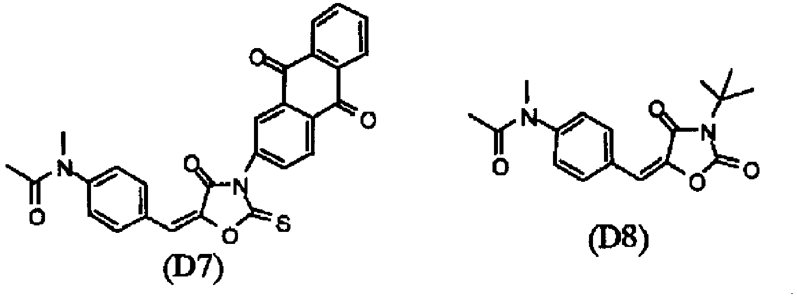

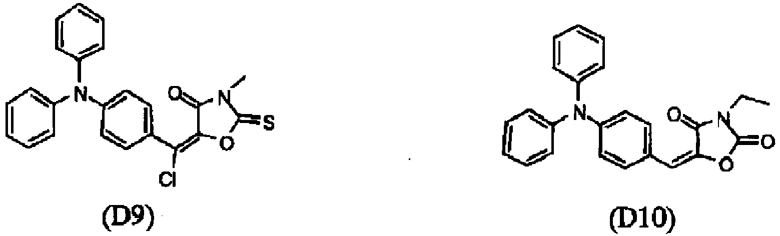

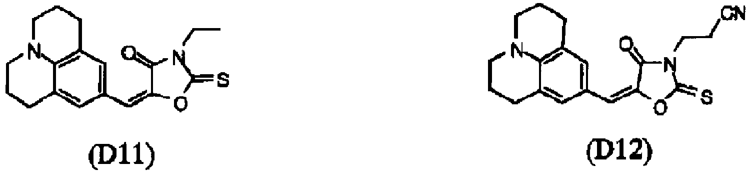

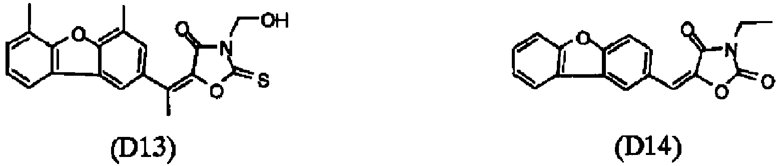

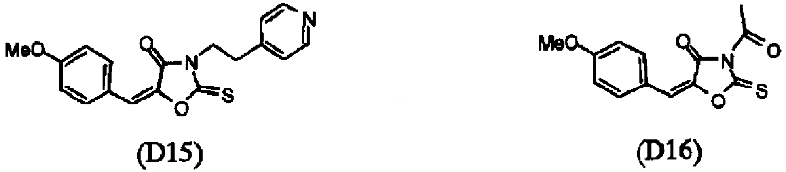

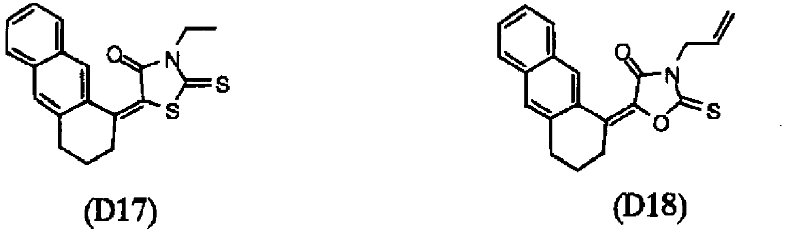

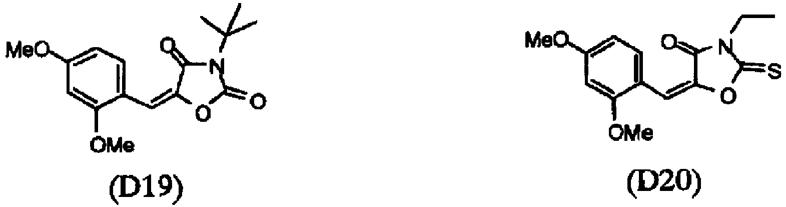

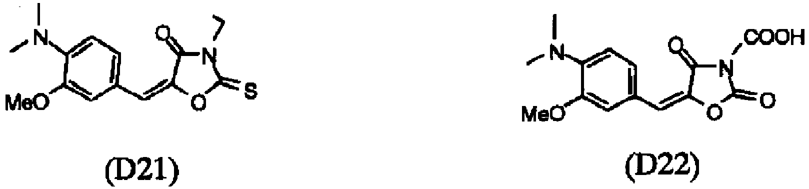

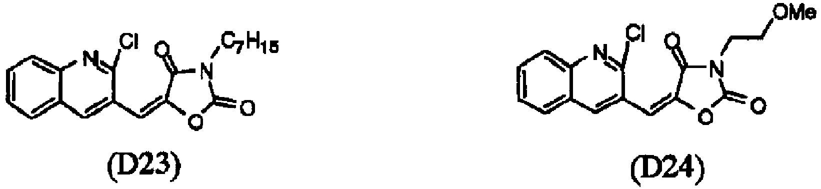

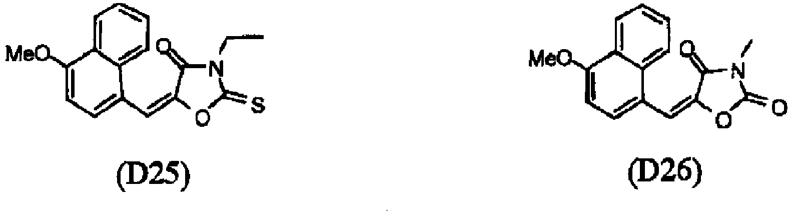

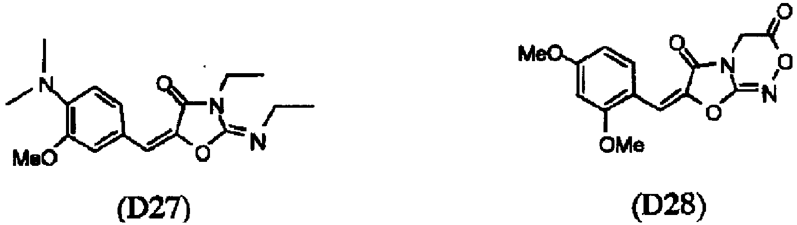

### (1-2) Chemical modification of sensitizing dye

Regarding the sensitizing dyes, furthermore, if a planographic printing plate is produced by using the polymerization initiation system of the present invention, various chemical modifications may be performed so as to improve the properties of the image formed by the inkjet recording ink including the sensitizing dyes. For example, by bonding a sensitizing dye and an addition polymerizable compound structure (such as an acryloyl group or a methacryloyl group) by a method such as covalent bonding, ionic bonding, or hydrogen bonding, the exposed film can be strengthened, and unnecessary precipitation of dye from the exposed film can be prevented.

Furthermore, if a planographic printing plate is produced by using the polymerization initiation system of the present invention, then with respect to the object of increasing the adhesiveness onto the aluminum support serving as the preferred usage mode of the image formed by the inkjet recording ink including the sensitizing dyes, it is effective to introduce a hydrophilic site (carboxyl group or the ester thereof, a sulfonic acid group or the ester thereof, an acid group such as an ethylene oxide group, or a polar group). Besides, for example suitable substituents may be introduced so as to improve the compatibility and prevent the crystal precipitation in the inkjet recording ink. For example, in a type of polymerization initiation system, an unsaturated bond of such as an aryl group or an allyl group may be very effective to improve the compatibility in some cases. Moreover, by introducing a steric hindrance between π planes of dyes by, for example, a method of introducing a branched alkyl structure, the crystal precipitation can be remarkably prevented. Furthermore, by introducing a phosphonic acid group, an epoxy radical, a trialkoxysilyl group or the like, the adhesiveness onto inorganic substances such as a metal or a metallic oxide can be improved. In addition, a method such as polymerization of sensitizing dyes may be used according to the object.

Details of the usage such as which structure of the sensitizing dyes to be used, whether it is solely used or two types or more are used in combination, the dosage, and the like, may be suitably set according to the performance design of the final sensitive material. For example, by using two types of sensitizing dyes or more in combination, the compatibility in the inkjet recording ink can be improved. For the selection of sensitizing dye, in addition to the photosensitivity, the molar absorbance coefficient at the emission wavelength of the radiation source to be used is an important factor. By using a sensitizing dye having a relatively large molar absorbance coefficient, it is economical since the dosage of the sensitizing dye can be relatively reduced. Moreover, if it is used for a planographic printing plate, it is advantageous from the point of film property of the image layer. Since the photosensitivity, the resolution, and the properties of the image are largely affected by the absorbance at the radiation source wavelength, the dosage of the sensitizing dye is suitably selected considering them. If it is used as a planographic printing plate that is used at a relatively thick film thickness, the dosage of the sensitizing dye is preferably set so that for example the absorbance of the image formed by the inkjet recording ink containing this sensitizing dye is within a range of 0.1 to 1.5, preferably 0.25 to 1. If the absorbance is not less than 0.1, the sensitivity would not be decreased, and the resolution would not be decreased due to the effect of halation. Moreover, even if the absorbance is less than 0.1, in some cases the degree of cure can be rather increased with respect to the object of curing a thick film of not less than 5 µm. If the absorbance is not more than 3, most of the radiation is absorbed in the vicinity of the image surface and the curing of far inside is not inhibited. For example, even if it is used as a printing plate, a sufficient film strength and substrate adhesiveness can be obtained.

If it is used as a planographic printing plate, the dosage of the sensitizing dye is normally within a range of 0.05 to 30 mass parts, preferably 0.1 to 20 mass parts, more preferably 0.2 to 10 mass parts, with respect to 100 mass parts of the inkjet recording ink.

### (1-3) Polymerizable compound

The polymerizable compound used in the ink composition of the present invention is not specifically limited as long as it causes the polymerization reaction from the active species generated from the polymerization initiator described later and is capable of being cured, and a radical polymerizable compound and a cationic polymerizable compound are used.

Hereunder is a description of the radical polymerizable compound and the cationic polymerizable compound.

### (1-3-1) Radical polymerizable compound

The radical polymerizable compound is a compound having an ethylenic unsaturated bond capable of radical polymerization, and may be in any form as long as a molecule includes at least one ethylenic unsaturated bond capable of radical polymerization, including a chemical form such as a monomer, an oligomer, and a polymer. One type of such radical polymerizable compound may be used, or, in order to improve a purposed property, two or more types thereof may be used at any ratio. Moreover, polyfunctional compounds having two or more functional groups are more preferred than monofunctional compounds. A combined use of two or more types of polyfunctional compounds is further preferred in controlling the performance such as reactivity and physical properties.

Examples of the radical polymerizable compounds include radical polymerizable compounds such as; unsaturated carboxylic acid such as acrylic acid, methacrylic acid, itaconic acid, crotonic acid, isocrotonic acid, maleic acid or the like and its salt, ester, urethane, amido and anhydrite, acrylonitorile, styrene, and further various types of unsaturated polyester, unsaturated polyether, unsaturated polyamide, and unsaturated urethane. Specific examples include: acrylic acid derivatives such as 2-ethylhexylacrylate, stearylacrylate, 2-hydroxyethylacrylate, butoxyethylacrylate, carbitolacrylate, cyclohexylacrylate, tetrahydrofurfurylacrylate, benzylacrylate, bis (4-acryloxypolyethoxyphenyl)propane, neopentylglycoldiacrylate, 1,6-hexanedioldiacrylate, ethyleneglycoldiacrylate, diethyleneglycoldiacrylate, triethyleneglycoldiacrylate, tetraethyleneglycoldiacrylate, polyethyleneglycoldiacrylate, polypropyleneglycoldiacrylate, pentaerythritoltriacrylate, pentaerythritoltetraacrylate, dipentaerythritoltetraacrylate, trimethylolpropanetriacrylate, tetramethylolmethanetetraacrylate, oligoesteracrylate, N-methylolacrylamide, diacetoneacrylamide, epoxyacrylate, and urethane acrylate; methacrylic acid derivatives such as methylmethacrylate, n-butylmethacrylate, 2-ethylhexylmethacrylate, lauryl methacrylate, allylmethacrylate, glycidylmethacrylate, benzylmethacrylate, dimethylaminomethylmethacrylate, 1,6-hexanedioldimethacrylate, ethyleneglycoldimethacrylate, triethyleneglycoldimethacrylate, polyethyleneglycoldimethacrylate, polypropyleneglycoldimethacrylate, trimethylolethane trimethacrylate, trimethylolpropane trimethacrylate, and 2,2-bis(4-methacryloxypolyethoxyphenyl)propane; and allyl compound derivatives such as allylglycidylether, diallylphthalate, and triallyltrimellitate. Further specifically, commercially available or well known in the industry, radical polimerizable or crosslinkable monomers, oligomers and polymers described in "Cross-linking Agent Handbook" written by Shinzo Yamashita (1981, Taiseisha); "UV, EB Curing Handbook (ingredient part)" written by Kiyoshi Kato (1985, Koubunshikankoukai); P. 79 in "Application and Market of UV, EB curing technique" written by RadTech Japan (1989, CMC); "Polyester Resin Handbook" written by Eiichiro Takiyama (1988, The Nikkan Kogyo Shinbun, Ltd.) can be used.

### (1-3-2) Cationic polymerizable compound

As the cationic polymerizable compound, various well-known cationic polymerizable monomers that have been known as a photo cationic polymerizable monomer may be used. Examples of the cationic polymerizable monomer include the epoxy compounds, the vinylether compounds, and the oxetane compounds described in , for example, Japanese Unexamined Patent Publication No. H06-9714, and Japanese Unexamined Patent Publication Nos. 2001-31892, 2001-40068, 2001-55507, 2001-310938, 2001-310937, and 2001-220526.

Examples of the epoxy compounds include aromatic epoxide, alicyclic epoxide and aliphatic epoxide.

Examples of the aromatic epoxide include diglycidylether or polyglycidylether produced by reaction between polyphenol having at least one aromatic nucleus or its alkyleneoxide adduct and epichlorohydrin, for example diglycidylether or polyglycidylether of bisphenol A or its alkyleneoxide adduct, diglycidylether or polyglycidylether of hydrogenated bisphenol A or its alkyleneoxide adduct, and novolac-type epoxy resin. Here, examples of the alkyleneoxide include ethyleneoxide and propyleneoxide.

Examples of the alicyclic epoxide include compounds including cyclohexeneoxide or cyclopenteneoxide obtained by epoxidazing a compound having at least one cycloalkane ring such as a cyclohexene or cyclopentene ring with a proper oxidizer such as hydrogen peroxide, or peroxy acid.

Examples of the aliphatic epoxide include diglycidylether or polyglycidylether of aliphatic polyalcohol or its alkyleneoxide adduct. Typical examples thereof include diglycidylether of alkyleneglycol such as diglycidylether of ethyleneglycol, diglycidylether of propyleneglycol, diglycidylether of 1,6-hexanediol, polyglycidylether of polyalcohol such as diglycidylether or triglycidylether of glycerin or its alkyleneoxide adduct, diglycidylether of polyalkyleneglycol such as diglycicylether of polyethyleneglycol or its alkyleneoxide adduct, diglycidylether of polypropyleneglycol or its alkyleneoxide adduct. Here, examples of the alkyleneoxide include ethyleneoxide and propyleneoxide.

Among the epoxy compounds, from the viewpoint of rapid curability, preferred are the aromatic epoxide and the alicyclic epoxide, in particular, the alicyclic expoxide.

Examples of vinylether compounds include divinylether compounds or trivinylether compounds such as ethyleneglycoldivinylether, diethyleneglycoldivinylether, triethyleneglycoldivinylether, propyleneglycoldivinylether, dipropyleneglycoldivinylether, butanedioldivinylether, hexanedioldivinylether, cyclohexanedimethanoldivinylether, and trimethylolpropanetrivinylether, and monovinylether compounds such as ethylvinylether, n-butylvinylether, isobutylvinylether, octadecylvinylether, cyclohexylvinylether, hydroxybutylvinylether, 2-ethylhexylvinylether, cyclohexanedimethanolmonovinylether, n-propylvinylether, isopropylvinylether, isopropenylether-O-propylenecarbonate, dodecylvinylether, diethyleneglycolmonovinylether, and octadecylvinylether.

As the vinyl ether compounds, from the viewpoint of curability, adhesiveness onto the recording medium, and surface hardness of the formed image, preferred are the divinylether compounds or the trivinylether compounds, in particular, the divinylether compounds.

The oxetane compound in the present invention means a compound having one or more oxetane rings. Any one of well-known oxetane compounds such as described in Japanese Unexamined Patent Publication Nos. 2001-220526, 2001-310937, and 2003-341217 may be selected and used.

The oxetane ring-containing compound employable for the ink composition of the present invention is preferably a compound having one to 4 oxetane rings in its structure. By using such a compound, the viscosity of the ink composition can be readily kept within a range of excellent handling properties, and high adhesiveness of the cured ink onto the recording medium can be obtained.

Examples of the compound having 1 to 2 oxetane rings in a molecule include the compounds represented by the following formulae (i) to (iii).

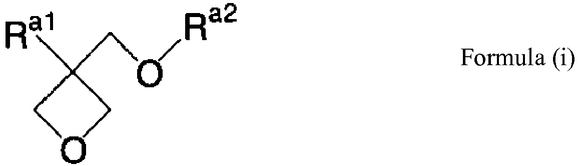

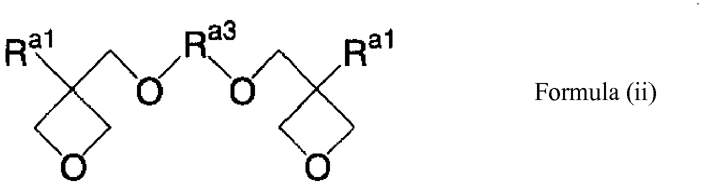

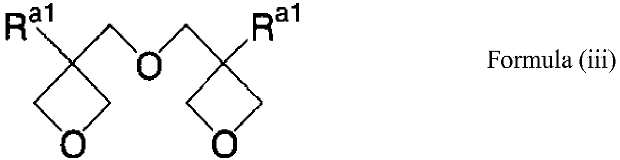

In the formulae (i) to (iii), R^{a1} represents a hydrogen atom, an alkyl group having 1 to 6 carbon atoms, a fluoroalkyl group having 1 to 6 carbon atoms, an allyl group, an aryl group, a furyl group, or a thienyl group. If there are two R^{a1} in a molecule, they may be the same or different.

Examples of the alkyl group include a methyl group, an ethyl group, a propyl group, and a butyl group. Preferred examples of the fluoroalkyl group include the alkyl groups wherein any one of hydrogens is substituted with the fluorine atom.

In the formula (i), R^{a2} represents a hydrogen atom, an alkyl group having 1 to 6 carbon atoms, an alkenyl group having 2 to 6 carbon atoms, a group having one or more aromatic rings, an alkylcarbonyl group having 2 to 6 carbon atoms, an alkoxycarbonyl group having 2 to 6 carbon atoms, and an N-alkylcarbamoyl group having 2 to 6 carbon atoms.

Examples of the alkyl group include a methyl group, an ethyl group, a propyl group, and a butyl group. Examples of the alkenyl group include a 1-propenyl group, a 2-propenyl group, a 2-methyl-1-propenyl group, a 2-methyl-2-propenyl group, a 1-butenyl group, a 2-butenyl group, and a 3-butenyl group. Examples of the group having one or more aromatic rings include a phenyl group, a benzyl group, a fluorobenzyl group, a methoxybenzyl group, and a phenoxyethyl group.

Examples of the alkylcarbonyl group include an ethylcarbonyl group, a propylcarbonyl group, and a butylcarbonyl group. Examples of the alkoxycarbonyl group include an ethoxycarbonyl group, a propoxycarbonyl group, and a butoxycarbonyl group. Examples of the N-alkylcarbamoyl group include an ethylcarbamoyl group, a propylcarbamoyl group, a butylcarbamoyl group, and a pentylcarbamoyl group.

In the formula (ii), R^{a3} represents a linear or branched alkylene group, a linear or branched poly(alkyleneoxy) group, a linear or branched unsaturated hydrocarbon group, a carbonyl groups or an alkylene group including one or more carbonyl groups, an alkylene group including one or more carboxyl groups, an alkylene group including one or more carbamoyl groups, or any one of the following polyvalent groups.

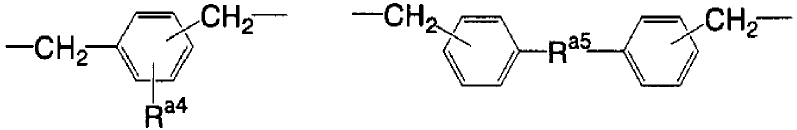

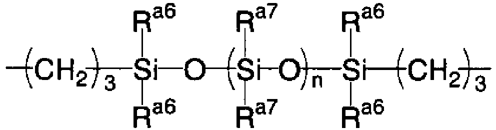

Examples of the alkylene group include an ethylene group, a propylene group, and a butylene group. Examples of the poly(alkyleneoxy) group include a poly (ethyleneoxy) group and a poly (propyleneoxy) group.

Examples of the unsaturated hydrocarbon group include a propenylene group, a methylpropenylene group, and a butenylene group.

In the polyvalent groups, R^{a4} represents a hydrogen atom, an alkyl group having 1 to 4 carbon atoms, an alkoxy group having 1 to 4 carbon atoms, a halogen atom, a nitro group, a cyano group, a mercapto group, a lower alkylcarboxyl group, a carboxyl group, or a carbamoyl group.

R^{a5} represents an oxygen atom, a sulfur atom, a methylenegroup, NH, SO, SO₂, C(CF₃)₂, or C(CH₃)₂.

R^{a6} represents an alkyl group having 1 to 4 carbon atoms or an aryl group. n is an integer of 0 to 2000.

R^{a7} represents an alkyl group having 1 to 4 carbon atoms, an aryl group, or a monovalent group having the following structure.

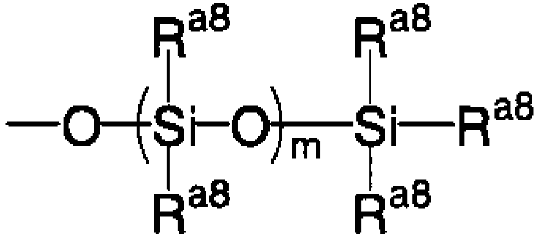

In the monovalent group, R^{a8} represents an alkyl group having 1 to 4 carbon atoms or an aryl group. m is an integer of 0 to 100.

Examples of the compound having 3 to 4 oxetane rings include the compounds represented by the following formula (iv).

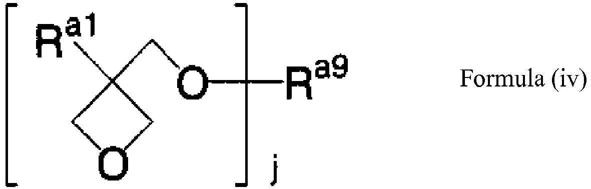

In the formula (iv), R^{a1} is synonymous with R^{a1} in the formula (i). R^{a9} represents a polyvalent linking group. Examples thereof include a branched alkylene group having 1 to 12 carbon atoms such as groups represented by A to C below, a branched poly(alkyleneoxy)group such as a group represented by D below, and a branched polysiloxy group such as a group represented by E below. J is 3 or 4.

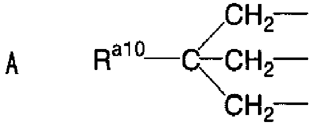

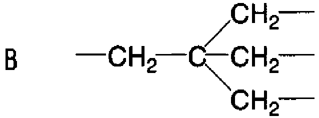

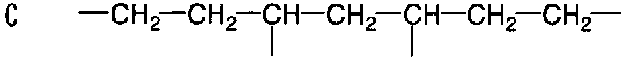

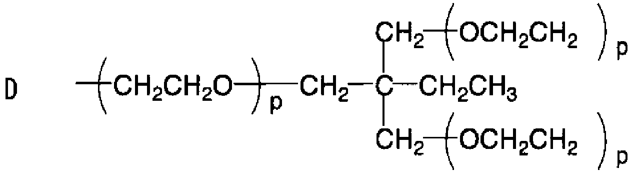

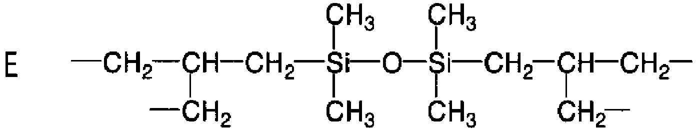

In A, R^{a10} represents a methyl group, an ethyl group, and a propyl group. In D, p is an integer of 1 to 10.

Another mode of the oxetane compound preferably used in the present invention includes a compound represented by the formula (v) having an oxetane ring on the side chain.

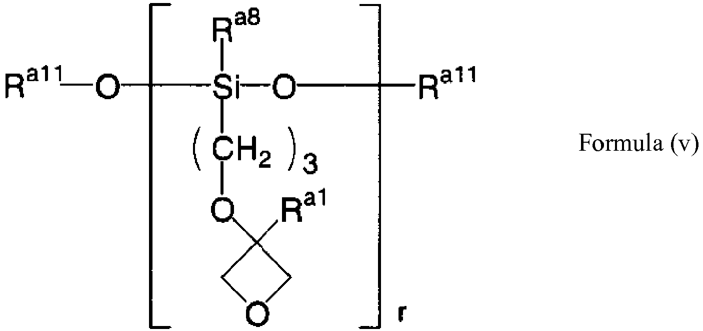

In the formula (v), R^{a8} is synonymous with R^{a8} in the formula (iv). R^{a11} represents an alkyl group having 1 to 4 carbon atoms such as a methyl group, an ethyl group, a propyl group, or a butyl group, or a trialkylsilyl group. r is 1 to 4.

Examples of such an oxetane ring-containing compound are described in detail in Japanese Unexamined Patent Publication No. 2003-341217, paragraphs [0021] to [0084]. The compounds described therein can be preferably used in the present invention.

Among the oxetane compounds used in the present invention, a compound having one oxetane ring is preferably used from the viewpoint of viscosity and cohesiveness of the ink composition.

In the ink composition of the present invention, one type of the polymerizable compounds may be solely used, or two or more types thereof may be used in combination. However, at least one type of an oxetane compound and at least one type of a compound selected from the epoxy compounds and the vinylether compounds are preferably used in combination from the viewpoint of effectively suppressing the shrinkage of the ink at the time of being cured.

The content of the polymerizable compound in the ink composition of the present invention is within a range of preferably 98 to 50 mass %, more preferably 95 to 60 mass %, and even more preferably 90 to 70 mass % in the total solid weight of the ink composition from the viewpoint of sensitivity based on the polymerization reactivity and the viscosity of the ink composition.

### (1-4) Polymerization initiator

The ink composition of the present invention contains a polymerization initiator.

Examples of the polymerization initiator in the ink composition of the present invention include well known photopolymerization initiators of a radial polymerization or a cationic polymerization used for the radioactive ray curable ink composition. An other photopolymerization initiator which can be used therewith in the present invention is a compound which is chemically changed by light action or through interaction with the electron excited state of the sensitizing dye, to generate at least one of a radical, an acid, or a base. Regarding the specific photopolymerization initiator, those known to those in the skilled in the art can be used without limitation. A large number of specific examples thereof are described in Bruce M. Monroe, et al., Chemical Revue, Vol. 93 (1993), page 435, and R. S. Davidson, Journal of Photochemistry and Biology, A: Chemistry, Vol. 73 (1993), page 81, J. P. Faussier, Photoinitiated Polymerization-Theory and Applications: Rapra Review vol.9, Report, Rapra Technology (1998), and M. Tsunooka et al., Prog. Polym. Sci., 21, 1 (1996). Moreover, a large number of compounds utilized in chemical amplification type photoresists and photo cationic polymerization are described in Yuki Electronics Zairyo Kenkyukai, ed., Imaging-yo Yuki Zairyo, pages 187 to 192, Bun-Shin Publishing (1993). Furthermore, compounds undergoing oxidatively or reductively cleavage of a bond through interaction with the electron excited state of the sensitizing dye described in F. D. Saeva, Topics in Current Chemistry, 156, 59 (1990), G. G. Maslak, Topics in Current Chemistry, 168, 1 (1993), H. B. Shuster et al., JACS, 112, 6329 (1990) and I. D. F. Eaton et al., JACS, 102, 3298 (1980) are also known.

Preferred photopolymerization initiators include (a) aromatic ketones, (b) aromatic onium salts, (c) organic peroxides, (d) hexaarylbiimidazole compounds, (e) ketooxime ester compounds, (f) borate compounds, (g) azinium compounds, (h) metallocene compounds, (i) active ester compounds, and (j) compounds having a carbon-halogen bond.

Preferred examples of (a) aromatic ketones include compounds having a benzophenone skeleton or a thioxanthone skeleton described in "RADIATION CURING IN POLYMER SCIENCE AND TECHNOLOGY" J. P. FOUASSIER J. F. RABEK (1993), p77 to 117. More preferred examples of (a) aromatic ketones include *α-*thiobenzophenone compounds described in Japanese Examined Patent Publication No. S47-6416, benzoin ether compounds described in Japanese Examined Patent Publication No. S47-3981, *α*-substituted benzoin compounds described in Japanese Examined Patent Publication No. S47-22326, benzoin derivatives described in Japanese Examined Patent Publication No. S47-23664, aroylphosphonic esters described in Japanese Unexamined Patent Publication No. S57-30704, dialkoxybenzophenones described in Japanese Examined Patent Publication No. S60-26483, benzoin ethers described in Japanese Examined Patent Publication No. S60-26403 and Japanese Unexamined Patent Publication No. S62-81345, *α*-aminobenzophenones described in Japanese Examined Patent Publication No. H01-34242, U.S. Patent No. 4,318,791, and European Patent No. 0284561A1, p-di(dimethylaminobenzoyl)benzenes described in Japanese Unexamined Patent Publication No. H02-211452, thio-substituted aromatic ketones described in Japanese Unexamined Patent Publication No. S61-194062, acylphosphine sulfides described in Japanese Examined Patent Publication No. H02-9597, acylphosphines described in Japanese Examined Patent Publication No. H02-9596, thioxanthones described in Japanese Examined Patent Publication No. S63-61950, and coumarins described in Japanese Examined Patent Publication No. S59-42864.

Examples of (b) aromatic onium salts include aromatic onium salts of an element in V, VI, and VII groups of the periodic table, specifically, N, P, As, Sb, Bi, O, S, Se, Te, or I. Preferred examples thereof include iodonium salts described in European Patent No. 104143, U.S. Patent No. 4837124, Japanese Unexamined Patent Publication No. H02-150848, and Japanese Unexamined Patent Publication No. H02-96514; diazonium salts (such as benzene diazonium that may have substituents), described in European Patent Nos. 370693, 233567, 297443, 297442, 279210, and 422570, U.S. Patent Nos. 3902144, 4933377, 4760013, 4734444, and 2833827; diazonium salt resins (such as a formaldehyde resin of diazodiphenylamine); N-alkoxypyridinium salts (for example, described in U.S. Patent No. 4,743,528, Japanese Unexamined Patent Publication No. S63-138345, Japanese Unexamined Patent Publication No. S63-142345, Japanese Unexamined Patent Publication No. S63-142346, and Japanese Examined Patent Publication No. S46-42363, specifically, such as 1-methoxy-4-phenylpyridinium tetrafluoroborate), and furthermore the compounds described in Japanese Examined Patent Publication Nos. S52-147277, S52-14278, and S52-14279. Preferred examples of the aromatic onium salts further include sulfonium salts described in, for example, J.V.Crivello et al., Polymer J. 17, 73 (1985), J. V. Crivello et al., J. Org. Chem., 43, 3055 (1978), W. R. Watt et al., J. PolymerSci., Polymer Chem. Ed., 22, 1789 (1984), J. V. Crivello et al., Polymer Bull., 14, 279 (1985), J. V. Crivello et al., Macromorecules, 14 (5), 1141 (1981), J. V. Crivello et al., J. Polymer Sci., Polymer Chem. Ed., 17, 2877 (1979), European Patent Nos. 370693, 161811, 410201, 339049, 233567, 297443 and 297442, U. S. Patent Nos. 3902114, 4933377, 4760013, 4734444 and 2833827, German Patent Nos. 2904626, 3604580 and 3604581, and Japanese Unexamined Patent Publication Nos. H07-28237 and No. H08-27102. As active species, radicals or acids are generated.

Examples of (c) "organic peroxides" include almost all of the organic compounds having one or more oxygen-oxygen bonds in a molecule. Preferred examples thereof include ester peroxides such as 3,3'4,4'-tetra-(t-butylperoxycarbonyl)benzophenone, 3,3'4,4'-tetra-(t-amylperoxycarbonyl)benzophenone, 3,3'4,4'-tetra-(t-hexylperoxycarbonyl)benzophenone, 3,3'4,4'-tetra-(t-octylperoxycarbonyl)benzophenone, 3,3'4,4'-tetra-(cumylperoxycarbonyl)benzophenone, 3,3'4,4'-tetra-(p-isopropylcumylperoxycarbonyl)benzophenone, and di-t-butyldiperoxyisophthalate.

Examples of (d) hexaarylbiimidazoles include lophine dimer compounds described in Japanese Examined Patent Publication No. S45-37377 and Japanese Examined Patent Publication No. S44-86516, for example 2,2'-bis(o-chlorophenyl)-4,4',5,5'-tetraphenylbiimidazole, 2,2'-bis(o-bromophenyl)-4,4',5,5'-tetraphenylbiimidazole, 2,2'-bis(o,p-dichlorophenyl)-4,4',5,5'-tetraphenylbiimidazole, 2,2'-bis(o-chlorophenyl)-4,4',5,5'-tetra(m-methoxyphenyl)biimidazole, 2,2'-bis(o,o'-dichlorophenyl)-4,4',5,5'-tetraphenylbiimidazole, 2,2'-bis(o-nitrophenyl)-4,4',5,5'-tetraphenylbiimidazole, 2,2'-bis(o-methylphenyl)-4,4',5,5'-tetraphenylbiimidazole, and 2,2'-bis(o-trifluorophenyl)-4,4',5,5'-tetraphenylbiimidazole.

Examples of (e) ketooxime ester compounds include 3-benzoyloxyiminobutan-2-one, 3-acetoxyiminobutan-2-one, 3-propionyloxyiminobutan-2-one, 2-acetoxyiminopentane-3-one, 2-acetoxyimino-1-phenylpropan-1-one, 2-benzoyloxyimino-1-phenylpropan-1-one, 3-p-toluenesulphonyloxyiminobutan-2-one, and 2-ethoxycarbonyloxyimino-1-phenylpropan-1-one.

Examples of (f) borate compounds include the compounds described in U.S. Patent Nos. 3,567,453 and 4,343,891, European Patent Nos. 109,772 and 109,773.

Examples of (g) azinium salt compounds include compounds having an N-O bond described in Japanese Unexamined Patent Publication No. S63-138345, Japanese Unexamined Patent Publication No. S63-142345, Japanese Unexamined Patent Publication No. S63-142346, Japanese Unexamined Patent Publication No. S63-143537, and Japanese Examined Patent Publication No. S46-42363.

Examples of (h) metallocene compounds include titanocene compounds described in Japanese Unexamined Patent Publication No. S59-152396, Japanese Unexamined Patent Publication No. S61-151197, Japanese Unexamined Patent Publication No. S63-41484, Japanese Unexamined Patent Publication No. H02-249, and Japanese Unexamined Patent Publication No. H02-4705, and iron-arene complexes described in Japanese Unexamined Patent Publication No. H01-304453 and Japanese Unexamined Patent Publication No. H01-152109.

Specific examples of the titanocene compounds include di-cyclopentadienyl-Ti-di-chloride, di-cyclopentadienyl-Ti-bis-phenyl, di-cyclopentadienyl-Ti-bis-2,3,4,5,6-pentafluorophen-1-yl, di-cyclopentadienyl-Ti-bis-2,3,5,6-tetrafluorophen-1-yl, di-cyclopentadienyl-Ti-bis-2,4,6-trifluorophen-1-yl, di-cyclopentadienyl-Ti-2,6-di-fluorophen-1-yl, di-cyclopentadienyl-Ti-bis-2,4-difluorophen-1-yl, di-methylcyclopentadienyl-Ti-bis-2,3,4,5,6-pentafluorophen-1-yl, di-methylcyclopentadienyl-Ti-bis-2,3,5,6-tetrafluorophen-1-yl, di-methylcyclopentadienyl-Ti-bis-2,4-difluorophen-1-yl, bis(cyclopentadienyl)-bis(2,6-difluoro-3-(pir-1-yl)phenyl)titanium, bis(cyclopentadienyl)bis[2,6-difluoro-3-(methylsulfonamido)phenyl] titanium, and bis(cyclopentadienyl)bis[2,6-difluoro-3-(N-butylbiaroyl-amino)phenyl] titanium.

Examples of (i) active ester compounds include nitrobenzyl ester compounds described in European Patent Nos. 0290750, 046083, 156153, 271851, and 0388343, U.S. Patent Nos. 3901710 and 4181531, Japanese Unexamined Patent Publication No. S60-198538, and Japanese Unexamined Patent Publication No. S53-133022, iminosulfonate compounds described in European Patent Nos. 0199672, 84515, 199672, 044115, and 0101122, U.S. Patent Nos. 4618564, 4371605, and 4431774, Japanese Unexamined Patent Publication No. S64-18143, Japanese Unexamined Patent Publication No. H02-245756, and Japanese Unexamined Patent Publication No. H04-365048, and the compounds described in Japanese Examined Patent Publication No. S62-6223, Japanese Examined Patent Publication No. S63-14340, and Japanese Unexamined Patent Publication No. S59-174831.

Preferred examples of (j) compounds having a carbon-halogen bond include the compounds described in Wakabayashi et al., Bull. Chem. Soc. Japan, 42, 2924 (1969), the compounds described in British Patent No. 1388492, the compounds described in Japanese Unexamined Patent Publication No. S53-133428, and the compounds described in German Patent No. 3337024.

Moreover, examples thereof further include the compounds described in F. C. Schaefer et al., J. Org. Chem., 29, 1527 (1964), the compounds described in Japanese Unexamined Patent Publication No. S62-58241, and the compounds described in Japanese Unexamined Patent Publication No. H05-281728. Furthermore, examples include the compounds described in German Patent No. 2641100, the compounds described in German Patent No. 3333450, the compounds described in German Patent No. 3021590, and the compounds described in German Patent No. 3021599.

Preferred specific examples of the compounds represented by the above (a) to (j) include the following.

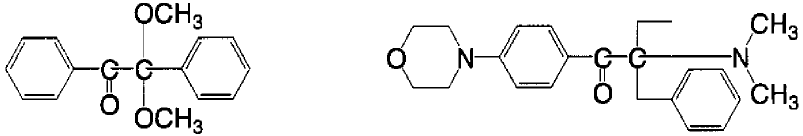

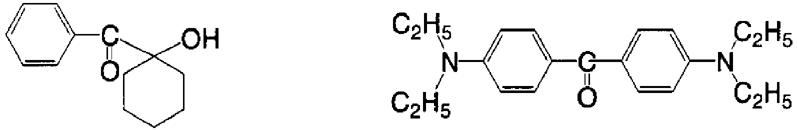

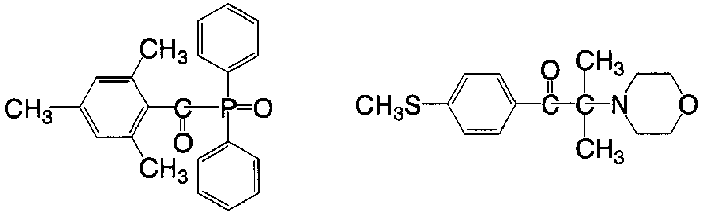

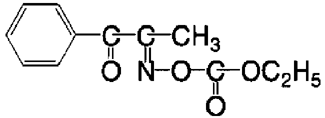

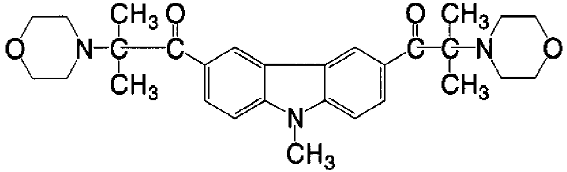

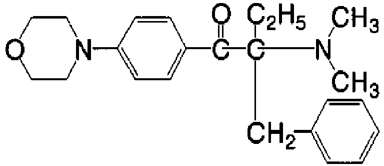

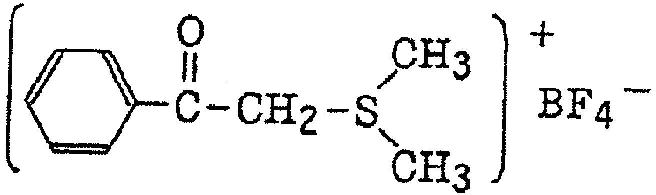

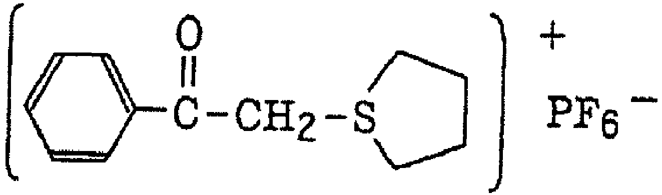

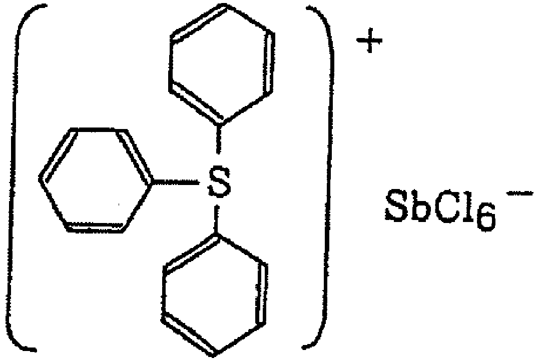

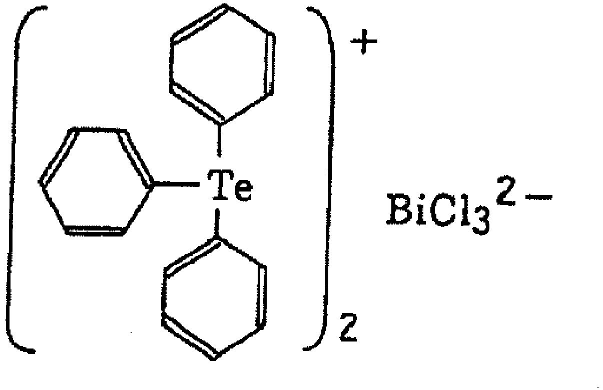

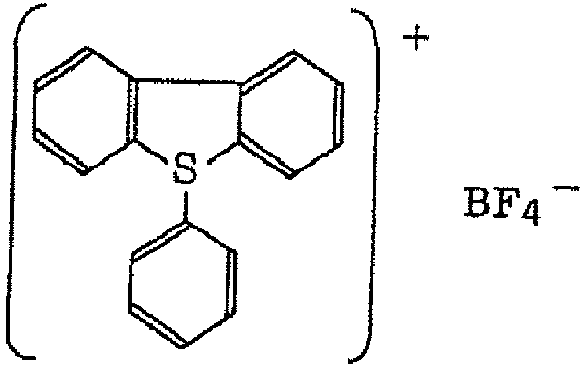

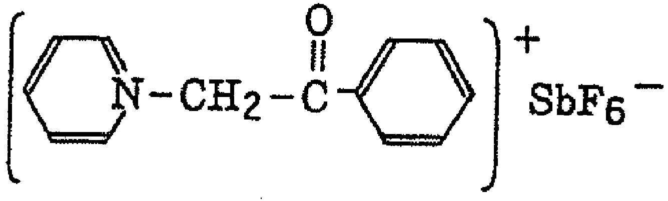

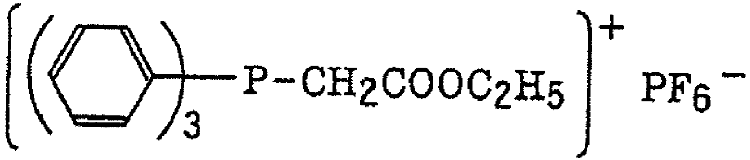

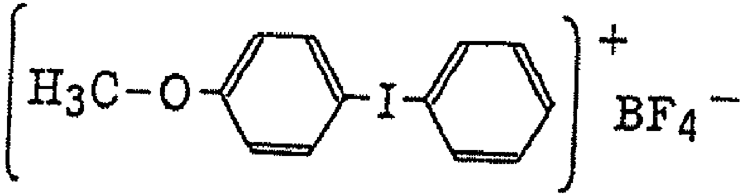

### (diazonium salts or quinonediazide)

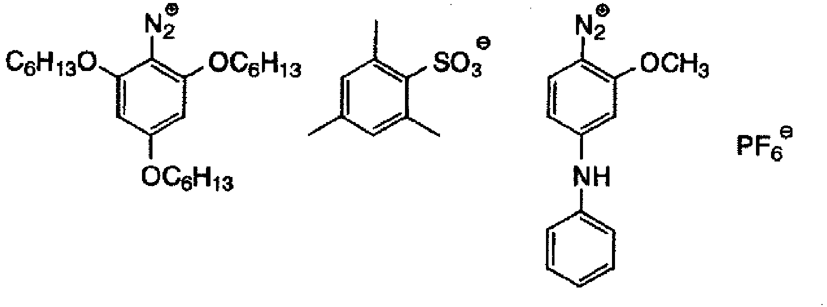

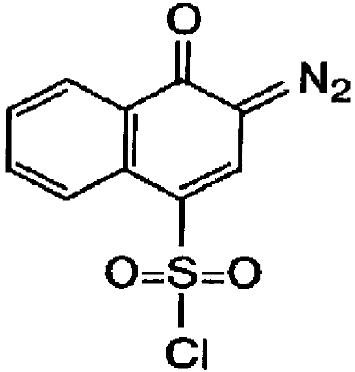

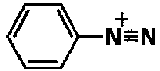

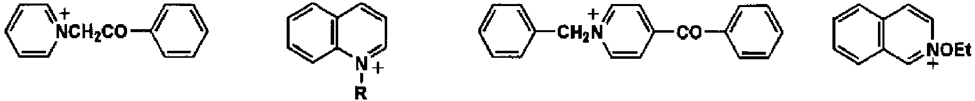

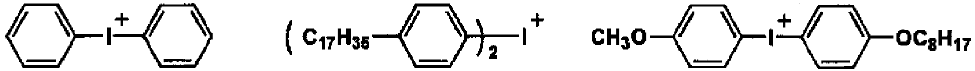

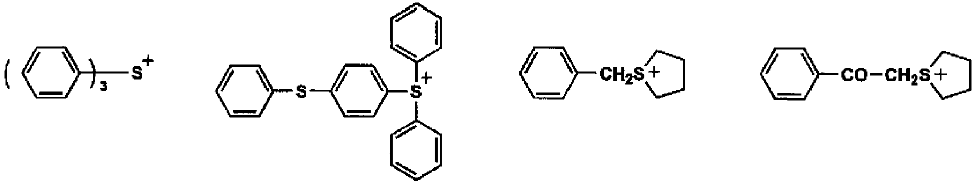

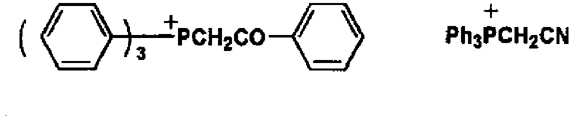

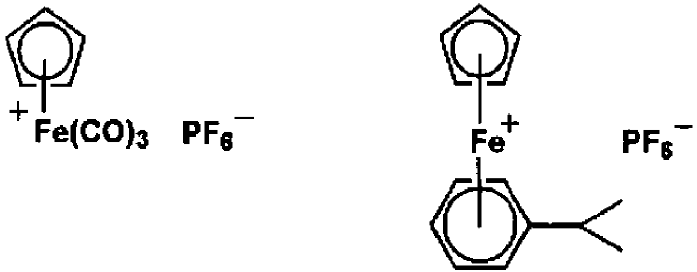

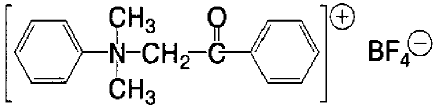

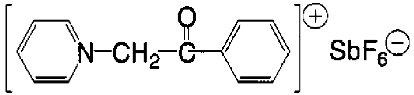

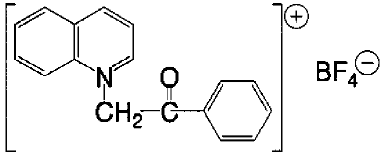

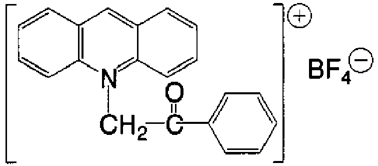

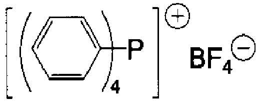

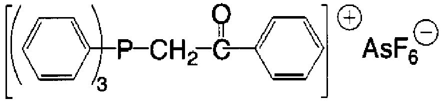

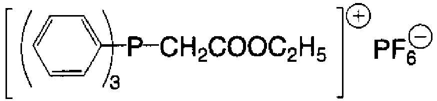

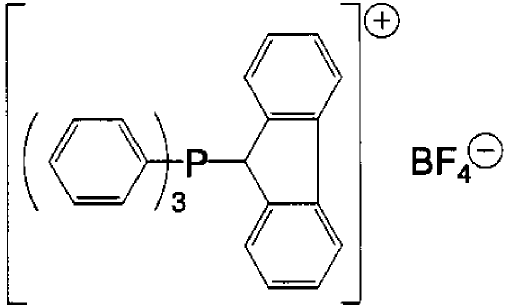

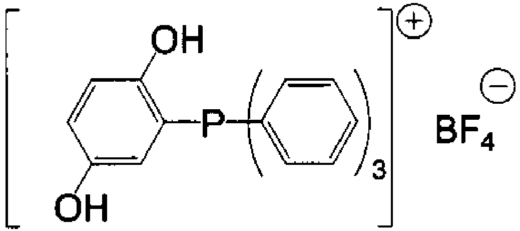

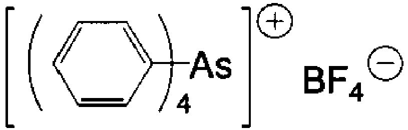

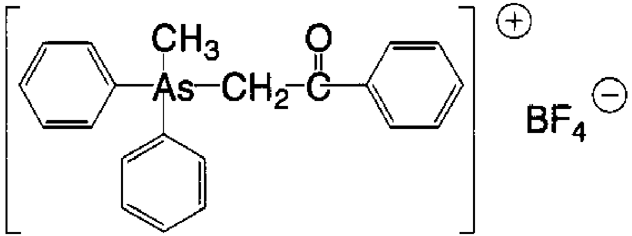

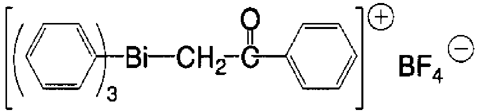

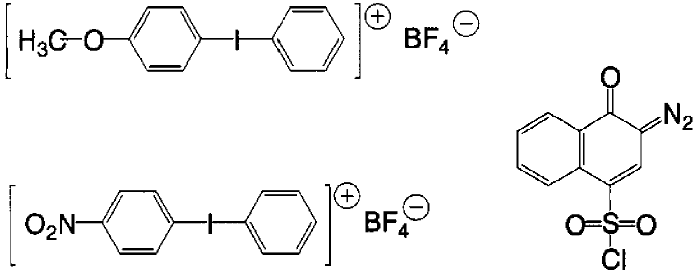

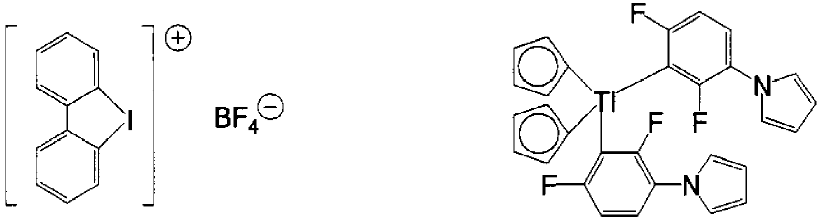

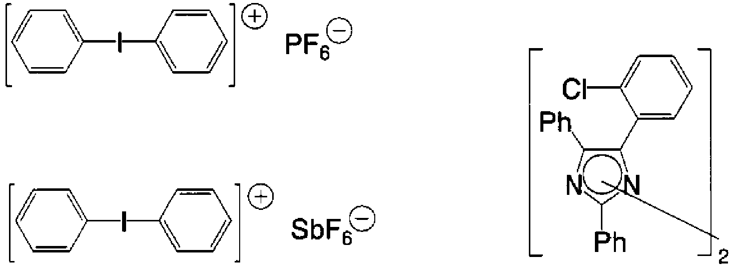

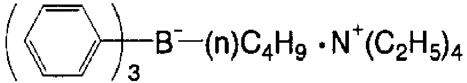

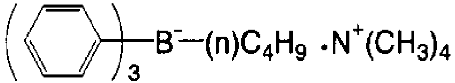

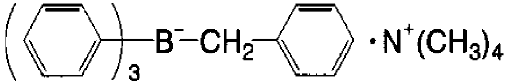

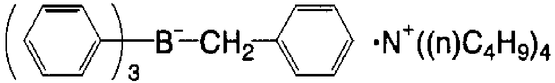

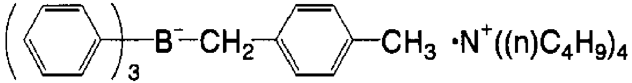

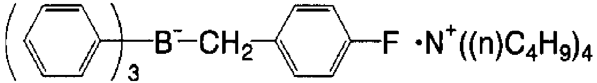

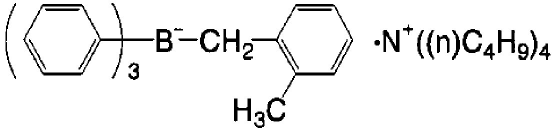

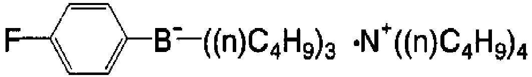

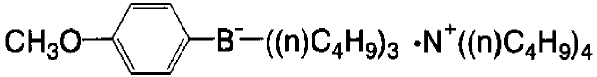

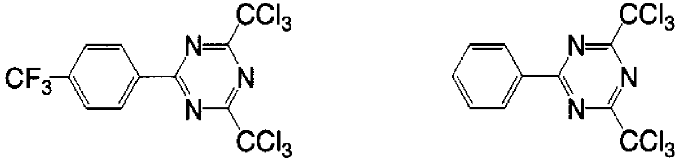

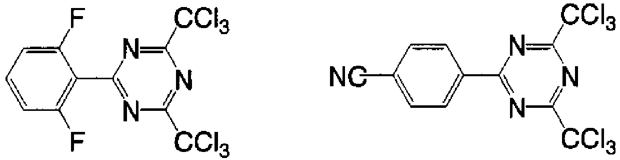

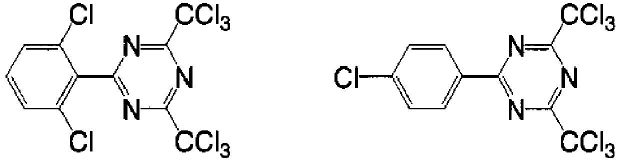

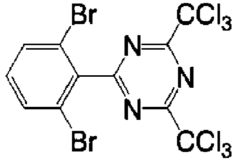

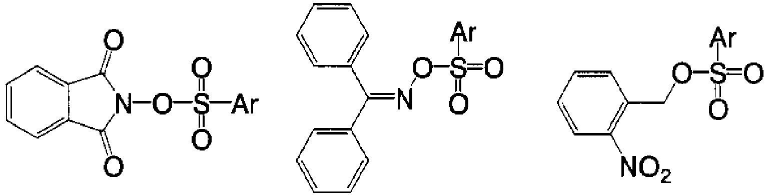

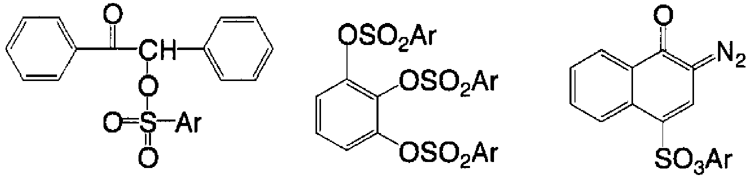

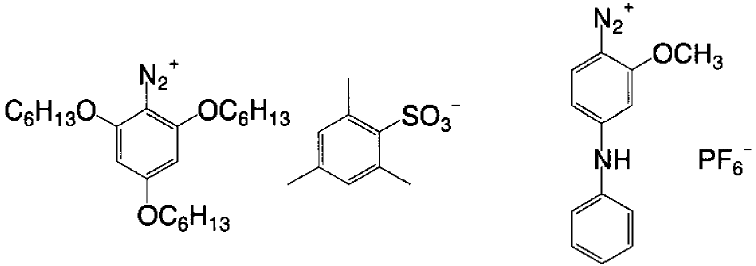

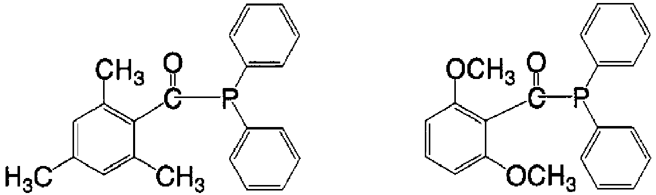

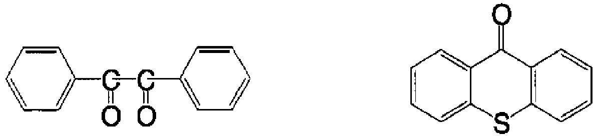

One type of the polymerization initiators may be solely used, or two or more types thereof may be used in combination.

The contents of the polymerization initiator in the ink composition of the present invention is preferably 1 to 40 mass %, more preferably 3 to 30 mass % with respect to the total amount of the ink composition.

For the ink composition of the present invention, various additives may be used together in addition to the sensitizing dye, the polymerizable compounds, and the polymerization initiator according to the object. Such optional components are described below.

### (1-5) Colorant

By adding a colorant into the ink composition of the present invention, a visible image can be formed. For example, if an image area on a planographic printing plate is formed, a colorant is not necessarily added. However, a colorant is preferably used from the viewpoint of the detectability of the obtained planographic printing plate.

The employable colorant is not specifically limited and various well-known colorants (pigments and dyes) may be suitably selected and used according to the usage. For example, if an image having excellent weather resistance is to be formed, a pigment is preferred. As a dye, any one of a water soluble dye or an oil soluble dye may be used, however an oil soluble dye is preferred.

### <Pigment>

First is a description of the colorant preferably used in the invention.

The pigment is not particularly limited, and any of the commercially available organic and inorganic pigments, a pigment dispersed in an insoluble resin or the like as a dispersion medium, and a pigment having a resin grafted on the surface thereof can be used. Resin particles dyed with a dye can also be also used.

Examples of the pigments include the pigments described in "Ganryo no Jiten (Pigment dictionary)" ed. by Seishiro Ito, Asakura Shoten (2000), W. Herbst, K. Hunger "Industrial Organic Pigments", Japanese Unexamined Patent Publication No. 2002-12607, Japanese Unexamined Patent Publication No. 2002-188025, Japanese Unexamined Patent Publication No. 2003-26978, and Japanese Unexamined Patent Publication No. 2003-342503.

Specific examples of the organic and inorganic pigments exhibiting yellow color employable in the present invention, include a monoazo pigment such as C.I. Pigment Yellow 1 (e.g., Fast Yellow G), and C.I. Pigment Yellow 74, a disazo pigment such as C.I. Pigment Yellow 12 (e.g., Disazo Yellow AAA) and C.I. Pigment Yellow 17, a non-benzidine azo pigment such as C.I. Pigment Yellow 180, an azo lake pigment such as C.I. Pigment Yellow 100 (e.g., Tartrazine Yellow Lake), a condensed azo pigment such as C.I. Pigment Yellow 95 (e.g., Condensed Azo Yellow GR), an acidic dye lake pigment such as C.I. Pigment Yellow 115 (e.g., Quinoline Yellow Lake), a basic dye lake pigment such as C.I. Pigment Yellow 18 (e.g., Thioflavin Lake), an anthraquinone pigment such as Flavanthrone Yellow (Y-24), an isoindolinone pigment such as Isoindolinone Yellow 3RLT (Y-110), a quinophthalone pigment such as Quinophthalone Yellow (Y-138), an isoindoline pigment such as Isoindoline Yellow (Y-139), a nitroso pigment such as C.I. Pigment Yellow 153 (e.g., Nickel Nitroso Yellow), and a metallic complex azomethine pigment such as C.I. Pigment Yellow 117 (e.g., Copper Azomethine Yellow).

Examples thereof exhibiting red or magenta color include a monoazo pigment such as C.I. Pigment Red 3 (e.g., Toluidine Red), a disazo pigment such as C.I. Pigment Red38 (e.g., Pyrazolone Red B), an azo lake pigment such as C.I. Pigment Red 53:1 (e.g., Lake Red C) and C.I. Pigment Red 57:1 (e.g., Brilliant Carmine 6B), a condensed azo pigment such as C.I. Pigment Red 144 (e.g., Condensed Azo Red BR), an acidic dye lake pigment such as C.I. pigment red 174 (e.g., Phloxin B lake), a basic dye lake pigment such as C.I. Pigment Red 81 (e.g., Rhodamine 6G' Lake), an anthraquinone pigment such as C.I. Pigment Red 177 (e.g., Dianthraquinonyl Red), a thioindigo pigment such as C.I. Pigment Red 88 (e.g., Thioindigo Bordeaux), a perynone pigment such as C.I. Pigment Red 194 (e.g., Perynone Red), a perylene pigment such as C.I. Pigment Red 149 (e.g., Perylene Scarlett), a quinacridone pigment such as C.I. Pigment Violet 19 (unsubstituted quinacridone), C.I. Pigment Red 122 (e.g., Quinacridone Magenta), an isoindolinone pigment such as C.I. Pigment Red 180 (e.g., Isoindolinone Red 2BLT), and an alizarin lake pigment such as C.I. Pigment Red 83 (e.g., Madder Lake).

Examples thereof exhibiting blue or cyan color include a disazo pigment such as C.I. Pigment Blue 25 (e.g., Dianisidine Blue), a phthalocyanine pigment such as C.I. Pigment Blue 15 (e.g., Phthalocyanine Blue), an acidic dye lake pigment such as C.I. Pigment Blue 24 (e.g., Peacock Blue Lake), a basic dye lake pigment such as C.I. Pigment Blue 1 (e.g., Victoria Pure Blue BO Lake), an anthraquinone pigment such as C.I. Pigment Blue 60 (e.g., Indanthrone Blue), and an alkali blue pigment such as C.I. Pigment Blue 18 (e.g., Alkali Blue V-5:1).

Examples thereof exhibiting green color include a phthalocyanine pigment such as C.I. Pigment Green 7 (Phthalocyanine Green), C.I. Pigment Green 36 (Phthalocyanine Green), and an azo metal complex pigment such as C.I. Pigment Green 8 (Nitroso Green).

Examples thereof exhibiting orange color include an isoindoline pigment such as C.I. Pigment Orange 66 (Isoindoline Orange) and an anthraquinone pigment such as C.I. Pigment Orange 51 (Dichloropyranthrone Orange).

Examples thereof exhibiting black color include a carbon black, titanium black, and an aniline black.

As specific examples of white pigment, basic lead carbonate (2PbCO₃Pb(OH)₂, so-called silver white), zinc oxide (ZnO, so-called zinc white), titanium oxide (TiO₂, so-called, titanium white), and strontium titanate (SrTiO₃, so-called titanium strontium white) are employable.

Here, titanium oxide has a less specific gravity and a greater refractive index, and is chemically and physically stable, compared to other white pigments. Therefore, it has a greater concealing and tinting power as a pigment, and furthermore has a superior durability against acid, alkali, and other environment. Therefore, the titanium oxide is preferably used as a white pigment. Of course, other white pigments (may be other than the abovementioned white pigments) may be used as necessary.

For dispersing the pigment, respective dispersing devices such as a ball mill, a sand mill, an attritor, a roll mill, a jet mill, a homogenizer, a paint shaker, a kneader, an agitator, a henschel mixer, a colloid mill, an ultrasonic homogenizer, a pearl mill, and a wet type jet mill may be used.

Dispersing agents can also be added when a pigment is to be dispersed. Examples of the dispersing agent include a hydroxyl group containing carboxylate ester, a salt of long-chain polyaminoamide and high molecular weight acid ester, a salt of high molecular weight polycarboxylate, a high molecular weight unsaturated acid ester, a high molecular weight copolymer, a modified polyacrylate, an aliphatic polyvalent carboxylic acid, a naphthalenesulfonic acid-formalin condensate, a polyoxyethylenealkyl phosphate ester, and pigment derivatives. Moreover, a commercially available polymer dispersing agent such as a SOLSPERSE® series made by Zeneca Co. may be preferably used.

As a dispersing auxiliary, a synergist according to various types of pigments may be used. 1 to 50 mass parts of the dispersing agent and the dispersing auxiliary are preferably added with respect to 100 mass parts of the pigment.

In the ink composition, a solvent may be added as a dispersion medium for various components such as a pigment. Moreover, the polymerizable compound serving as a low molecular weight component may be used as a dispersion medium, without any solvent. Since the ink composition of the present invention is a radiation curable ink, and the ink is cured after the application on the recording medium, it is preferred not to use a solvent. The reason is that, if the solvent remains in a cured ink image, the solvent resistance is degraded, and problems with volatile organic compounds (VOC) of the residual solvent would occur. From such a viewpoint, polymerizable compounds are preferably used as the dispersion medium. Among these, a cationic polymerizable monomer having the lowest viscosity is preferably selected from the viewpoint of dispersing properties, and improving the handling properties of the ink composition.

The average particle diameter of the pigment particle is suitably set to 0.01 to 15 µm. The pigments, dispersing agent and dispersing medium are suitably selected and the dispersing and filtering conditions are suitably set so that the maximum particle diameter becomes 0.05 to 10 µm, preferably 0. 1 to 3 µm. Such control of the particle diameter prevents clogging at the jet nozzle, and keeps the storage stability, the transparency, and the curing sensitivity of the ink.

### <Dye>

Next is a description of dyes preferably used as the colorant in the present invention.

Such dyes may be properly selected from already-known compounds (dyes) and used. Specific examples thereof include dyes described in Japanese Unexamined Patent Publication No. 2002-114930 paragraphs [0023] to [0089].

Examples of the yellow dye include an aryl or heterylazo dye including, for example, phenols, naphtols, anilines, pyrazolones, pyridones, and closed active methylene compounds as coupling components; an azomethyne dye including, for example, closed active methylene compounds as the coupling components; a methyne dye such as a benzylidene dye or a monomethyne oxonol dye; and a quinone dye such as a naphthoquinone dye or an anthraquinone dye. Dyes other than these include a quinophthalone dye, a nitro/nitroso dye, an acridine dye, and an acridinone dye.

Examples of the magenta dye include an aryl or heterylazo dye including, for example, phenols, naphthols, anilines, pyrazolones, pyridones, pyrazolotriazoles, closed active methylene compounds (for example , dimedone, barbituric acid, 4-hydroxycoumarinderivatives), and electron rich heterocyclic rings (for example , pyrrole, imidazole, thiophene, and thiazole derivatives) as coupling components; an azomethyne dye including for example, pyrazolones and pyrazolotriazol as the coupling components; a methyne dye such as an arylidene dye, a styryl dye, a melocyanine dye, and an oxonol dye; a carbonium dye such as a diphenylmetane dye, a triphenylmetane dye, and a xanthene dye; a quinone dye such as naphtoquinone, anthraquinone, and anthrapyridone; and a condensed polycyclic dye such as a dioxazine dye.

Examples of the cyan dye include; an azomethyne dye such as indoaniline dye, and an indophenol dye; a polymethyne dye such as a cyanine dye, an oxonol dye, and a melocyanine dye; a carbonium dye such as a diphenylmethane dye, a triphenylmethane dye, and a xanthene dye; a phthalocyanine dye; an anthraquinone dye; an aryl or heterylazo dye including, for example, phenols, naphthols, anilines, pyrrolopyrimidine-one, pyrrolotriazine-one derivatives as the coupling components; and an indigo/thioindigo dye.

The abovementioned dyes may form the colors of yellow, magenta, and cyan, respectively, after a part of chromophores has dissociated from the dyes. In such a case, the counter cation may be an inorganic cation such as alkali metal or ammonium, an organic cation such as pyridinium or quaternary ammonium salt, or a cation polymer having the substructure thereof.

The dye used in the present invention is preferably oil soluble. Specifically, it means a dye having a solubility in water (mass of dye soluble in 100 g of water) at 25°C of not more than 1g, preferably not more than 0.5 g, and more preferably not more than 0.1 g. Therefore, a so-called oil soluble dye that is water-insoluble is preferably used.

In the dye used in the present invention, one or more oil soluble groups are preferably introduced into the parent dye described above so as to dissolve the required amount thereof into the ink composition.

Examples of the oil soluble group include: a long-chain or branched alkyl group, a long-chain or branched alkoxy group, a long-chain or branched alkylthio group, a long-chain or branched alkylsulfonyl group, a long-chain or branched acyloxy group, a long-chain or branched alkoxycarbonyl group, a long-chain or branched acyl group, a long-chain or branched acylamino group, a long-chain or branched alkylsulfonylamino group, a long-chain or branched alkylaminosulfonyl group; and an aryl group, an aryloxy group, an aryloxycarbonyl group, an arylcarbonyloxy group, an arylaminocarbonyl group, an arylaminosulfonyl group, and an arylsulfonylamino group including the above long-chain or branched substituents.

Moreover, a dye may be obtained by converting the water soluble dye having carboxylic acid or sulfonic acid into an alkoxycarbonyl group, an aryloxy carbonyl group, an alkylaminosulfonyl group, and an arylaminosulfonyl group serving as the oil soluble group using a long-chain or branched alcohol, amine, phenol, and aniline derivatives.

The oil soluble dye preferably has a melting point of not more than 200°C, more preferably, a melting point of not more than 150°C, and even more preferably a melting point of not more than 100°C. The use of an oil-soluble dye having a low melting point suppresses the precipitation of a dye crystal in the ink composition, and therefore the storage stability of the ink composition is improved.

Moreover, in order to improve the resistance against discoloration, in particular against an oxidizer such as an ozone, and to improve the curing property, the oxidation potential is desirably noble (high). Therefore, the oil soluble dye used in the present invention preferably has an oxidation potential of not less than 1.0V (vsSCE). The oxidation potential is preferably higher, more preferably not less than 1.1V (vsSCE), and even more preferably not less than 1.15V (vsSCE).

As a dye of yellow color, preferred are the compounds having a structure represented by the formula (Y-I) described in Japanese Unexamined Patent Publication No. 2004-250483.

Particularly preferred dye includes the dyes represented by the formulae (Y-II) to (Y-IV) described in Japanese Unexamined Patent Publication No. 2004-250483, paragraph [0034]. Specific examples thereof include the compounds described in Japanese Unexamined Patent Publication No. 2004-250483, paragraphs [0060] to [0071]. The oil soluble dye represented by the formula (Y-I) described in the document may be used for an ink of any color such as a black ink and a red ink as well as the yellow one.

As a dye of magenta color, preferred are the compounds having a structure represented by the formulae (3) and (4) described in Japanese Unexamined Patent Publication No. 2002-114930. Specific examples thereof include the compounds described in Japanese Unexamined Patent Publication No. 2002-114930, paragraphs

Particularly preferred dye includes the azo dyes represented by the formulae (M-1) to (M-2) described in Japanese Unexamined Patent Publication No. 2002-121414, paragraphs [0084] to [0122]. Specific examples thereof include the compounds described in Japanese Unexamined Patent Publication No. 2002-121414, paragraphs [0123] to [0132]. The oil soluble dye represented by the formulae (3), (4), (M-1) to (M-2) described in the document may be used for an ink of any color such as a black ink and a red ink as well as the magenta one.

As a dye of cyan color, preferred are the dyes represented by the formulae (I) to (IV) described in Japanese Unexamined Patent Publication No. 2001-181547, and the dyes represented by the formulae (IV-1) to (IV-4) described in Japanese Unexamined Patent Publication No. 2002-121414, paragraphs [0063] to [0078]. Specific examples thereof include the compounds described in Japanese Unexamined Patent Publication No. 2001-181547, paragraphs [0052] to [0066], and the compounds described in Japanese Unexamined Patent Publication No. 2002-121414, paragraphs [0079] to [0081].

Particularly preferred dye includes the phthalocyanine dyes represented by the formulae (C-I) and (C-II) described in Japanese Unexamined Patent Publication No. 2002-121414, paragraphs [0133] to [0196], furthermore the phthalocyanine dyes represented by the formula (C-II). Specific examples thereof include the compounds described in Japanese Unexamined Patent Publication No. 2002-121414, paragraphs [0198] to [0201]. The oil soluble dye represented by the formulae (I) to (IV), (IV-1) to (IV-4), (C-I), and (C-II) may be used for an ink of any color such as a black ink and a green ink as well as the cyan one.

### -Oxidation potential-

The oxidation potential value (Eox) of the dye of the present invention can be easily measured by one skilled in the art. The method therefor is described, for example, in P. Delahay, New Instrumental Methods in Electrochemistry, Interscience Publishers (1954), A. J. Bard et al., Electrochemical Methods, John Wiley & Sons (1980), and Akira Fujishima et al., Denkikagaku Sokutei Ho (Electrochemical Measuring Method), Gihodo Shuppan Sha (1984).

More specifically, a test sample is dissolved to a concentration of 1 x 10⁻² to 1 x 10⁻⁶ mol/liter in a solvent such as dimethylformamide or acetonitrile containing a supporting electrolyte such as sodium perchlorate or tetrapropylammonium perchlorate, and the oxidation potential is measured as a value with respect to SCE (saturated calomel electrode) by a cyclic voltammetry or a direct current polarography apparatus, using the intermediate potential value of a line segment made from: an intersection of an approximated line of an oxidation wave when swept to the oxidization side (nobler side) using a carbon (GC) as an active electrode and a rotating platinum electrode as a counter electrode, and a remaining current/potential line; and an intersection of a line and a saturated current line (or an intersection with a line in parallel to a vertical axis passing through the peak potential value). This value sometimes deviates in the order of several tens of millivolt due to the effect of, for example, liquid junction potential or liquid resistance of sample solution, but the reproducibility of potential can be guaranteed by adding a standard sample (for example, hydroquinone). The supporting electrolyte and the solvent to be used may be appropriately selected depending on the oxidation potential or the solubility of the sample. The employable supporting electrolyte and the solvent are described in Akira Fujishima, et al., Denki Kagaku Sokutei-ho, 1984, Gihodo Shuppan Co., Ltd., pages 101 to 118.

Within the concentration range of the measured solvent mentioned above and the phthalocyanine compound sample, the oxidation potential in the non-associated state is measured.

The Eox value indicates the transferability of electrons from the sample to the electrode. As the value becomes greater (the oxidation potential becomes nobler), it becomes more difficult for the electrons to transfer from the sample to the electrode, i.e., it becomes more difficult to oxidize the sample.

Hereunder are preferred specific examples of the dye used for the present invention, however the dyes used for the present invention are not limited to the following specific examples.

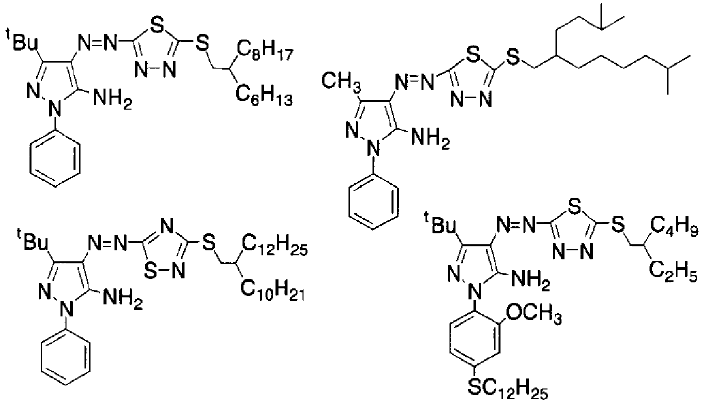

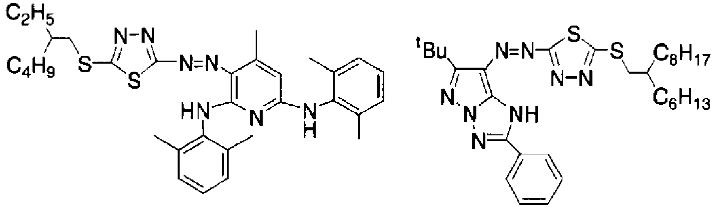

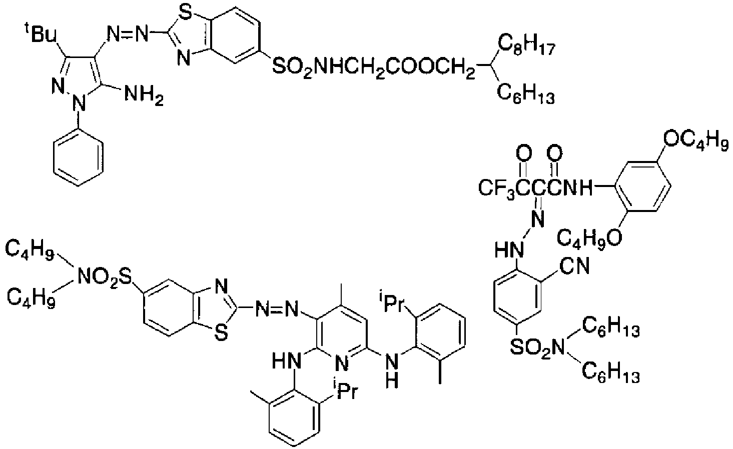

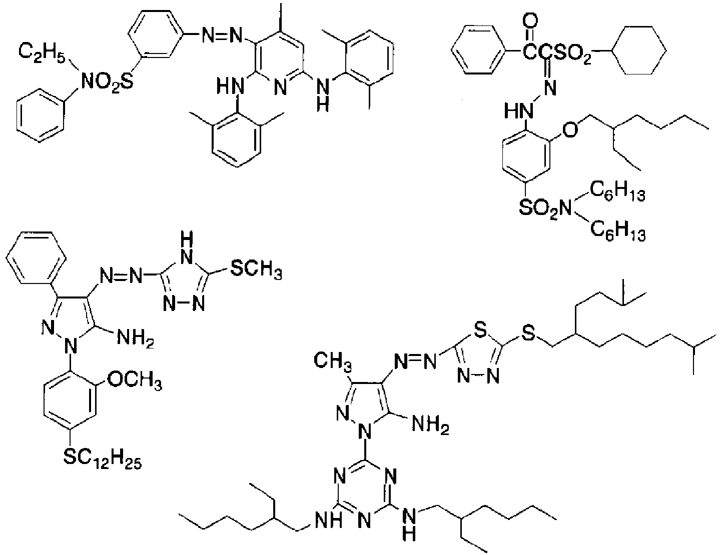

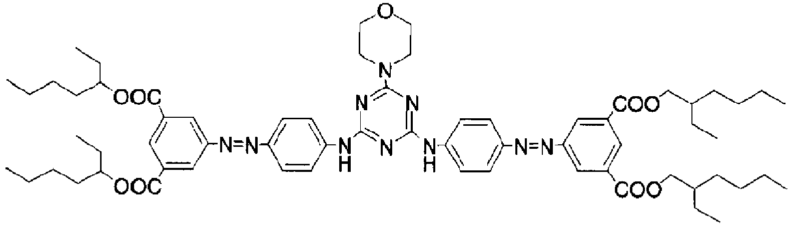

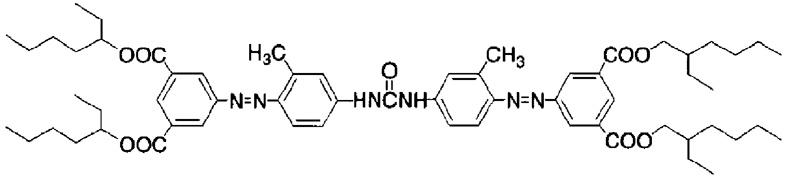

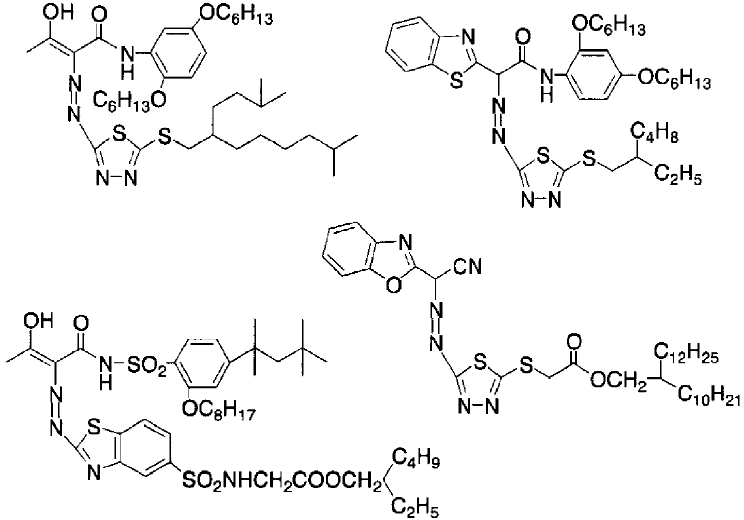

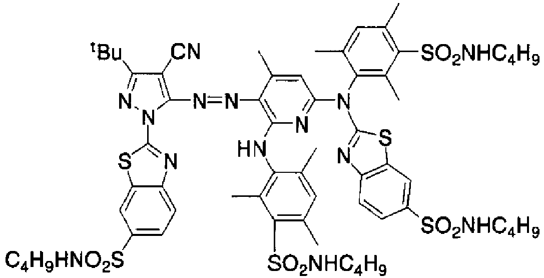

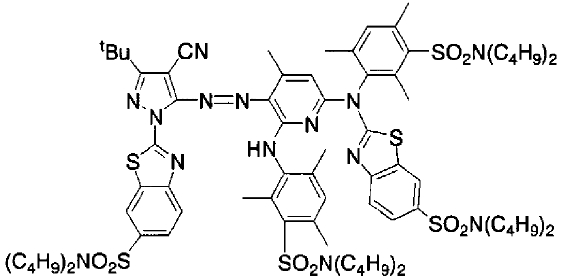

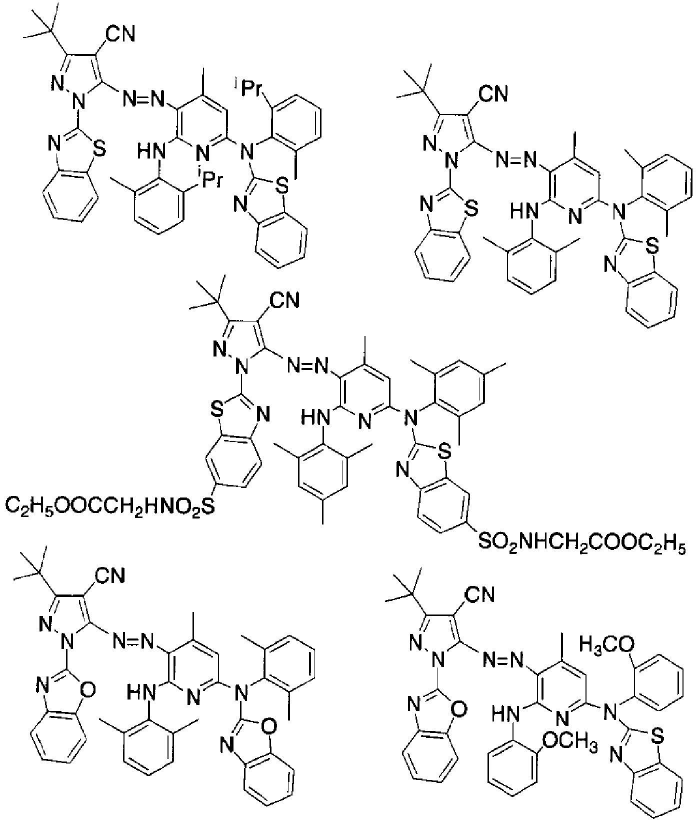

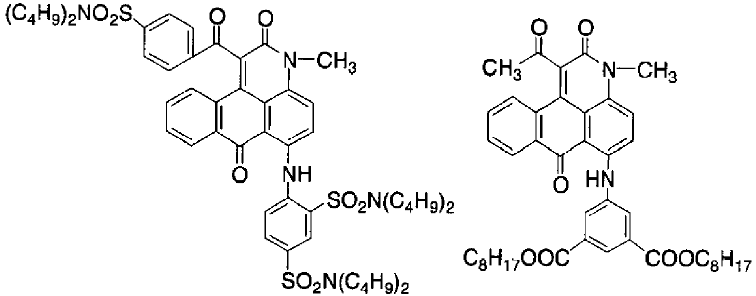

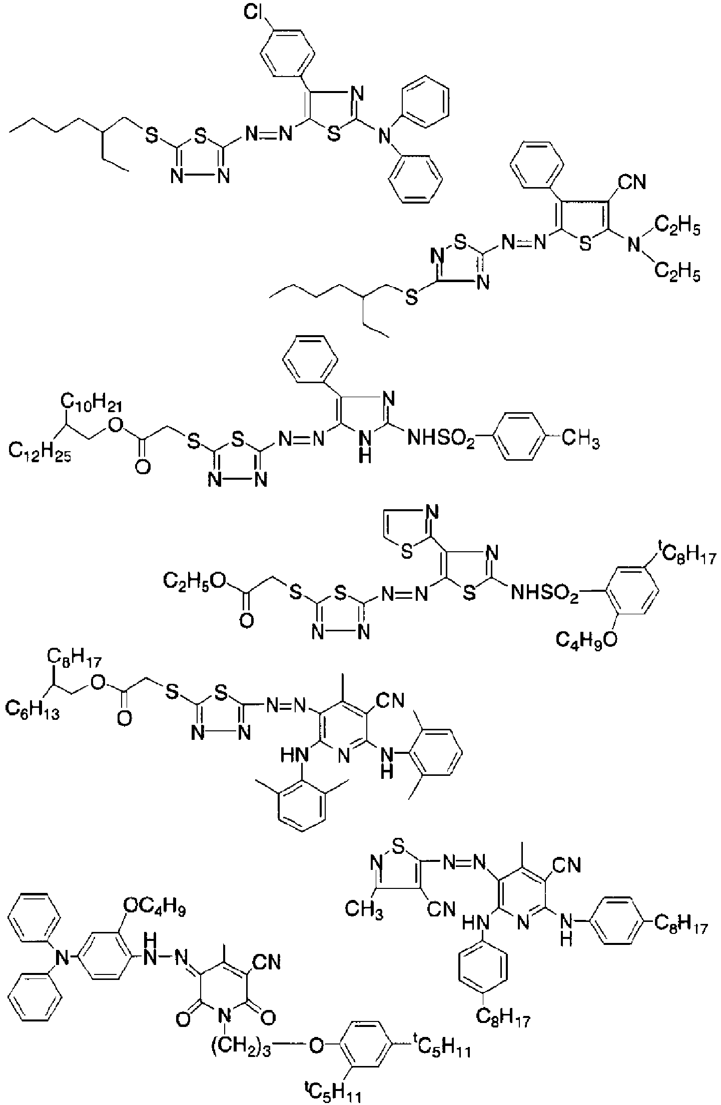

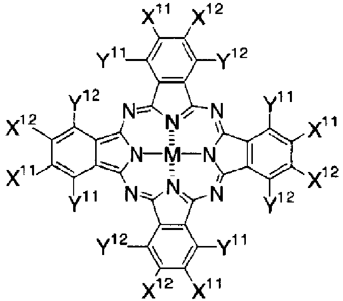

| No. | M | X¹¹ | X¹² | Y¹¹, Y¹² |
|---|---|---|---|---|
| D-1 | Cu | 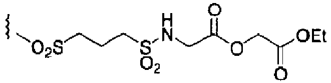 | H | H, H |
| D-2 | Cu | 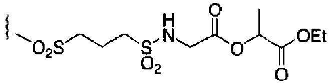 | H | H, H |
| D-3 | Cu | 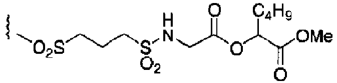 | H | H, H |
| D-4 | Cu | 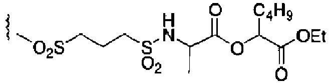 | H | H, H |
| D-5 | Cu | 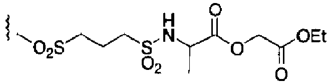 | H | H, H |
| D-6 | Cu | 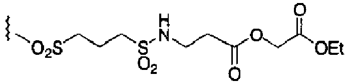 | H | H, H |
| D-7 | Cu | 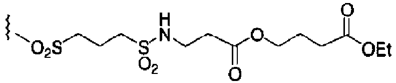 | H | H, H |
| D-8 | Cu | 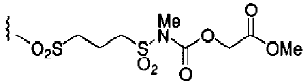 | H | H, H |

In the formula, specific examples of respective pairs of (X¹¹, X¹²) (Y¹¹, Y¹²) may be in any order.

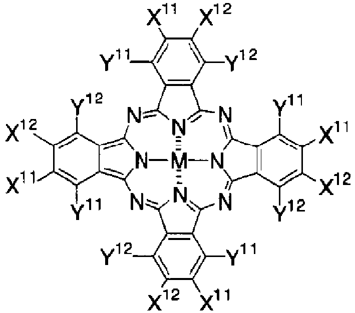

| No. | M | X¹¹ | X¹² | Y¹¹, Y¹² |
|---|---|---|---|---|
| D-9 | Cu | 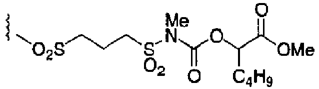 | H | H, H |
| D-10 | Cu | 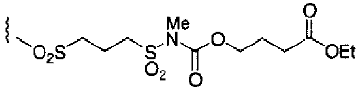 | H | H, H |
| D-11 | Cu | 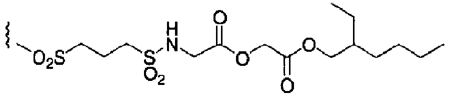 | H | H, H |
| D-1 2 | Cu | 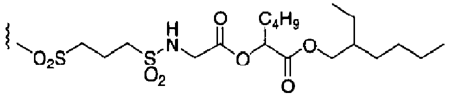 | H | H, H |
| D-13 | Cu | 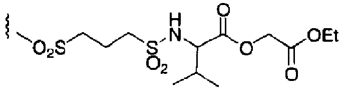 | H | H, H |
| D-14 | Cu | 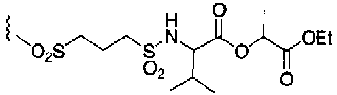 | H | H, H |
| D-15 | Cu | 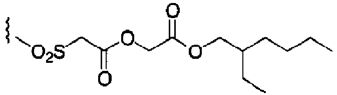 | H | H, H |
| D-16 | Cu | 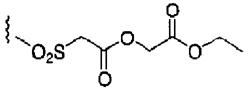 | H | H, H |

In the formula, specific examples of respective pairs of (X¹¹, X¹²) (Y¹¹, Y¹²) may be in any order.

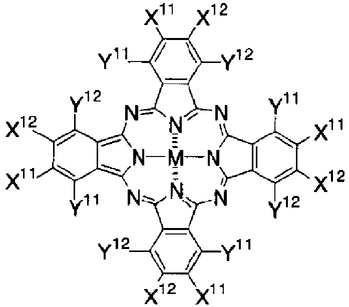

| No. | M | X¹¹ | X¹² | Y¹¹, Y¹² |
|---|---|---|---|---|
| D-17 | Cu | 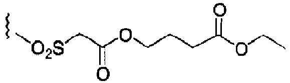 | H | H, H |
| D-18 | Cu | 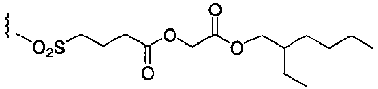 | H | H, H |
| D-19 | Cu | 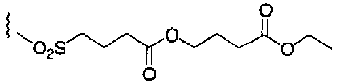 | H | H, H |
| D-20 | Cu | 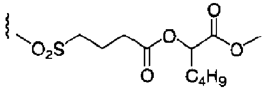 | H | H.H |
| D-21 | Cu | 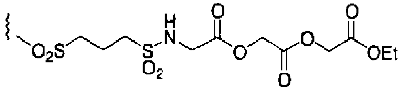 | H | H, H |
| D-22 | Cu | 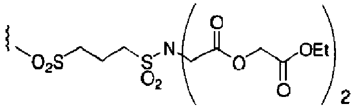 | H | H, H |
| D-23 | Cu | 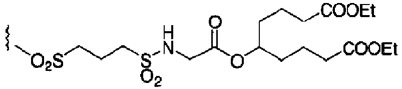 | H | H, H |

In the formula, specific examples of respective pairs of (X¹¹, X¹²) (Y¹¹, Y¹²) may be in any order.

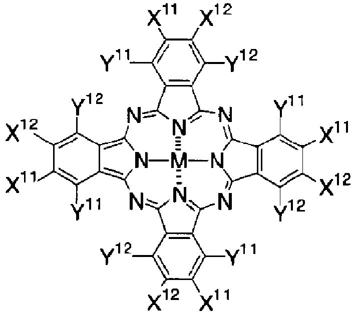

| No. | M | X¹¹ | X¹² | Y¹¹, Y¹² |
|---|---|---|---|---|
| D-24 | Cu | 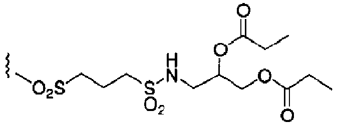 | H | H, H |
| D-25 | Cu | 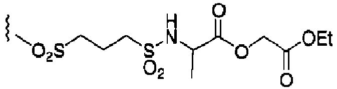 | H | H, Cl |
| D-26 | Cu | 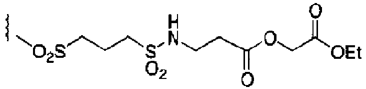 | H | H, Cl |
| D-27 | Cu | 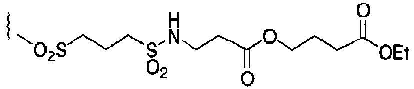 | H | H, Cl |
| D-28 | Cu | 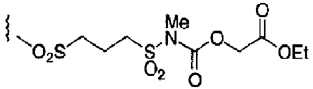 | H | H, Cl |
| D-29 | Cu | 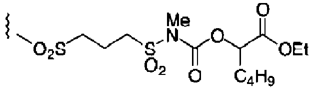 | H | H, Cl |
| D-30 | Cu | 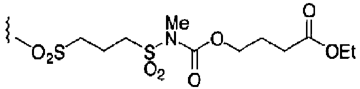 | H | H, Cl |

In the formula, specific examples of respective pairs of (X¹¹, X¹²) (Y¹¹, Y¹²) may be in any order.

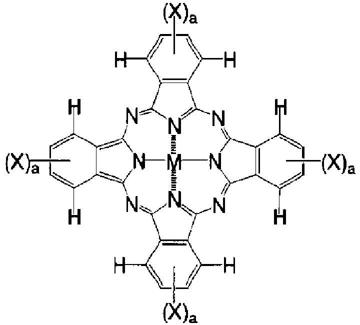

| No. | M | X | a |
|---|---|---|---|
| D-31 | Cu | 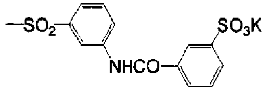 | 1 |
| D-32 | Cu | 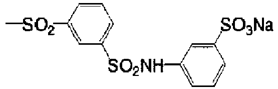 | 1 |
| D-33 | Cu | 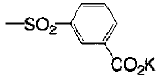 | 1 |
| D-34 | Ni | 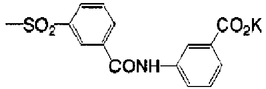 | 1 |
| D-35 | Cu | 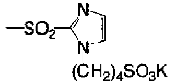 | 1 |
| D-36 | Cu | 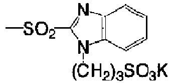 | 1 |
| D-37 | Cu | 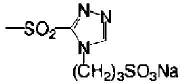 | 1 |
| D-38 | Cu | 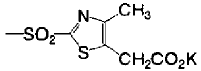 | 1 |

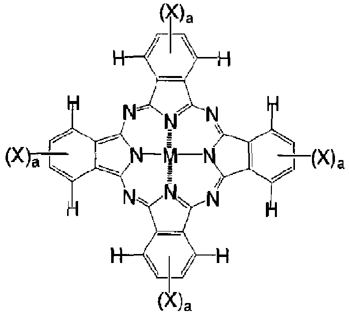

| No. | M | X | a |
|---|---|---|---|
| D-39 | Cu | 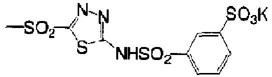 | 1 |
| D-40 | Cu | 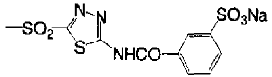 | 1 |
| D-41 | Cu | 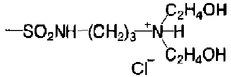 | 1 |
| D-42 | Cu | 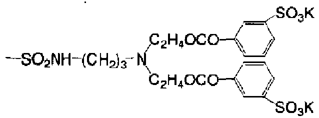 | 1 |
| D-43 | Cu | 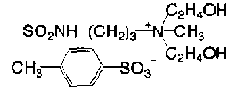 | 1 |
| D-44 | Cu | 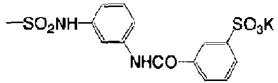 | 1 |
| D-45 | Cu | 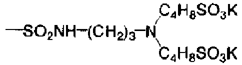 | 1 |
| D-46 | Ni | 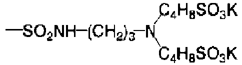 | 1 |

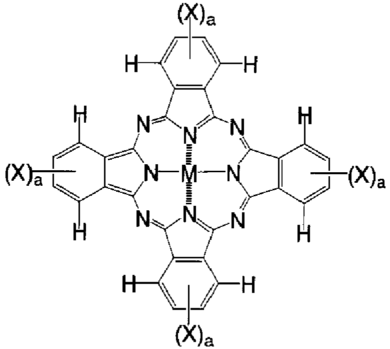

| No. | M | X | a |
|---|---|---|---|
| D-47 | Zn | 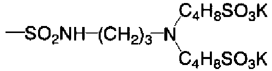 | 1 |
| D-48 | Cu | 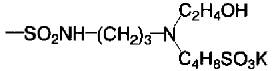 | 1 |
| D-49 | Cu | 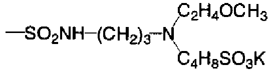 | 1 |
| D-50 | Cu | 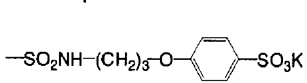 | 1 |

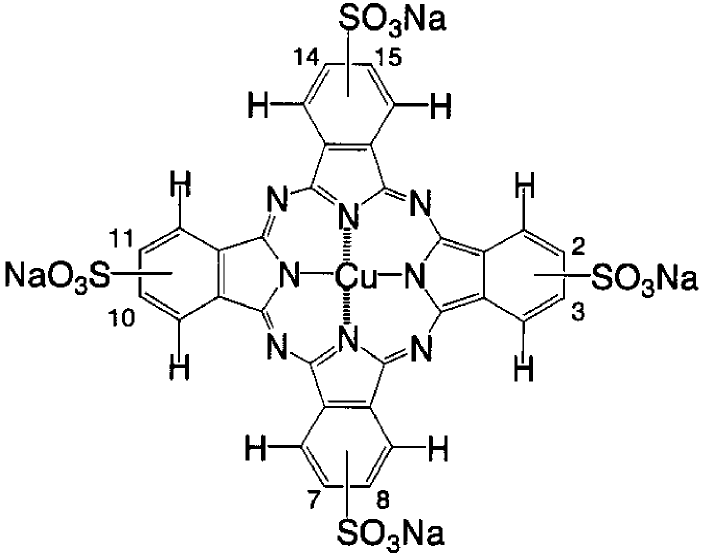

The colorant added in the ink composition is preferably 1 to 10 mass %, and more preferably 2 to 8 mass % with respect to the total amount of the ink composition.

### (1-6) Other components

Hereunder is a description of various additives used for the ink composition of the present invention as required.

### (Cosensitizer)

A well known compound having a function of further improving the sensitivity or suppressing the polymerization inhibition due to oxygen may be added as a cosensitizer into the ink composition of the present invention.

Examples of the cosensitizer include amine compounds described in M. R. Sander et. al. "Journal of Polymer Society" vol. 10, page 3173 (1972), Japanese Examined Patent Publication No. S44-20189, Japanese Unexamined Patent Publication No. S51-82102, Japanese Unexamined Patent Publication No. S52-134692, Japanese Unexamined Patent Publication No. S59-138205, Japanese Unexamined Patent Publication No. S60-84305, Japanese Unexamined Patent Publication No. S62-18537, Japanese Unexamined Patent Publication No. S64-33104, and Research Disclosure 33825. Specific examples thereof include triethanolamine, p-dimethylaminobenzoic acid ethyl ester, p-formyldimethylaniline, and p-methylthiodimethylaniline.

Other examples of the cosensitizer include thiols and sulfides such as thiol compounds described in Japanese Unexamined Patent Publication No. S53-702, Japanese Examined Patent Publication No. S55-500806, and Japanese Unexamined Patent Publication No. H05-142772, and disulfide compounds described in Japanese Unexamined Patent Publication No. S56-75643. Specific examples thereof include 2-mercaptobenzothiazole, 2-mercaptobenzoxazole, 2-mercaptobenzimidazole , 2-mercapto-4(3H)-quinazoline, and *β*-mercaptonaphthalene.

Still other examples of the cosensitizer include amino acid compounds (e.g., N-phenylglycine), organometal compounds (e.g., tributyl tin acetate) described in Japanese Examined Patent Publication No. S48-42965, hydrogen donors described in Japanese Examined Patent Publication No. S55-34414, sulfur compounds (e.g., trithiane) described in Japanese Unexamined Patent Publication No. H06-308727, and phosphorus compounds (e.g., diethylphosphite) described in Japanese Unexamined Patent Publication No. H06-250387.

The dosage is suitably selected according to the object, and generally about 0.01 to 10 mass % with respect to the total amount of the ink composition.

### (Polymerization inhibitor)

The polymerization inhibitor may be added to the ink composition of the present invention from the viewpoint of increasing the preservability. Moreover, when the ink composition of the present invention is applied to the inkjet recording, it is desirable to heat within a range of 40 to 80°C to lower the viscosity, and then eject. Therefore, in order to prevent clogging of the head due to the thermal polymerization, the polymerization inhibitor is preferably added.

Examples of such polymerization inhibitor include hydroquinone, benzoquinone, p-methoxyphenol, TEMPO, TEMPOL, and cupferron Al.

It is preferred to add 200 to 20000 ppm of the polymerization inhibitor with respect to the total amount of the ink composition of the present invention.

### (Ultraviolet absorber)

An ultraviolet absorber may be added to the ink composition of the present invention from the viewpoint of improving the weather resistance and preventing discoloration of the obtained image.

Examples of the ultraviolet absorber include benzotriazol compounds described in Japanese Unexamined Patent Publication Nos. S58-185677, S61-190537, H02-782, H05-197075 and H09-34057; benzophenone compounds described in Japanese Unexamined Patent Publication Nos. S46-2784 and H05-194483, and U.S. Pat. No. 3214463; cinnamic acid compounds described in Japanese Examined Patent Publication Nos. S48-30492 and S56-21141, and Japanese Unexamined Patent Publication No. H10-88106; triazine compounds described in Japanese Unexamined Patent Publication Nos. H04-298503, H08-53427, H08-239368, and H10-182621, and Published Japanese translation No. H08-5012911 of PCT International Publication; compounds described in Research Disclosure No. 24239; compounds which absorb ultraviolet rays to generate fluorescence, such as stilbene and benzoxazol compounds; and so-called fluorescent brightening agents.

The dosage is suitably selected according to the object, and generally about 0.01 to 10 mass % with respect to the total amount of the ink composition.

### (Anti-oxidant)

An anti-oxidant may be added to the ink composition of the present invention in order to improve the stability. Examples of the anti-oxidant include ones described in European Patent Publication Nos. 223739, 309401, 309402, 310551, 310552, and 459416, German Patent Publication No. 3435443, Japanese Unexamined Patent Publication Nos. S54-48535, S62-262047, S63-113536, and S63-163351, Japanese Unexamined Patent Publication No. H02-262654, Japanese Unexamined Patent Publication No. H02-71262, Japanese Unexamined Patent Publication No. H03-121449, Japanese Unexamined Patent Publication No. H05-61166, Japanese Unexamined Patent Publication No. H05-119449, U.S. Patent No. 4814262, and U.S. Patent No. 4980275.

The dosage is suitable selected according to the object, and generally about 0.01 to 10 mass % with respect to the total amount of the ink composition.

### (Discoloration inhibitor)

Various organic compounds and metal complexes can be used as a discoloration inhibitor in the ink composition of the present invention. Examples of the organic discoloration inhibitor include hydroquinones, alkoxyphenols, dialkoxyphenols, phenols, anilines, amines, indans, chromans, alkoxyanilines, and heterocycles. Examples of the metal complexes include a nickel complex and a zinc complex. Specific examples thereof include the compounds disclosed in the cited patents described in the I or J paragraph of the VII section of Research Disclosure No. 17643, Research Disclosure No. 15162, the left column of page 650 of Research Disclosure No. 18716, page 527 of Research Disclosure No. 36544, page 872 of Research Disclosure No. 307105, and Research Disclosure No. 15162, and compounds included in formulae of the representative compounds and examples of the compounds described in Japanese Unexamined Patent Publication No. S62-215272, page 127 to 137.

The dosage is suitable selected according to the object, and generally about 0.01 to 10 mass % with respect to the total amount of the ink composition.

### (Electroconductive salts)

With the object of controlling the ejecting property, electroconductive salts such as potassium thiocyanate, lithium nitrate, ammonium thiocyanate, and dimethylamine hydrochloride may be added to the ink composition of the present invention.

### (Solvent)

In order to improve the adhesiveness onto the recording medium, it is also effective to add trace amount of organic solvent into the ink composition of the present invention.

Examples of the solvent include: ketone solvents such as acetone, methylethyl ketone, diethyl ketone; alcohol solvents such as methanol, ethanol, 2-propanol, 1-propanol, 1-butanol, and tert-butanol; chlorinated solvents such as chloroform and methylene chloride; aromatic solvents such as benzene and toluene; ester solvents such as ethyl acetate, butyl acetate, and isopropyl acetate; ether solvents such as diethyl ether, tetrahydrofuran, and dioxane; and glycolether solvents such as ethylene glycol monomethylether and ethylene glycol dimethylether.

In this case, the effective addition is within a range not causing problems such as solvent resistance and VOC. The amount thereof is preferably within a range of 0.1 to 5 mass %, more preferably 0.1 to 3 mass % with respect to the total ink composition.

### (Polymer compounds)

In order to adjust the film property, various polymer compounds may be added to the ink composition of the present invention. Examples of the polymer compounds include an acrylic polymer, a polyvinyl butyral resin, a polyurethane resin, a polyamide resin, a polyester resin, an epoxy resin, a phenol resin, a polycarbonate resin, a polyvinyl butyral resin, a polyvinylformal resin, a shellac, a vinyl resin, an acrylic resin, a rubber resin, waxes, and other natural resins. Two types of these may be used in combination. Among these, preferred is a vinyl copolymer obtained by the copolymerization of acrylic monomers. Furthermore, copolymers including "carboxyl group containing monomer", "alkylester methacrylate", or "alkylester acrylate" as a structural unit can be also preferably be used as a copolymer composition of the polymer binding material.

### (Surfactant)

A surfactant may be added to the ink composition of the present invention. Examples of the surfactant include those described in Japanese Unexamined Patent Publication Nos. S62-173463 and S62-183457. Examples thereof include: anionic surfactants such as dialkyl sulfosuccinate, alkyl naphthalenesulfonate, and fatty acid salt; nonionic surfactants such as polyoxyethylene alkyl ether, polyoxyethylene alkyl aryl ether, acetylenic glycol, and polyoxyethylene/polyoxypropyrene block copolymer; and cationic surfactants such as alkylamine salt, and quaternary ammonium salt. An organic fluoro compound may be used instead of the surfactant. The organic fluoro compound is preferably hydrophobic. Examples of the organic fluoro compound include fluorine-containing surfactants, oily fluorine-containing compounds (such as fluorine oil), and fluorine-containing solid resins (such as ethylene tetrafluoride resin). The organic fluoro compounds are described in Japanese Examined Patent Publication No. S57-9053 (column 8 to 17), and Japanese Unexamined Patent Publication No. S62-135826.

In addition, leveling addition agents, matting agents, waxes for adjusting the film property, and a tackifier which does not inhibit the polymerization to improve the adhesiveness onto the recording medium such as polyolefine or PET may be added to the inkjet recording ink of the present invention as necessary.

Specific example of the tackifier include cohesive polymers of high molecular weight described in Japanese Unexamined Patent Publication No. 2001-49200, page 5 to 6 (for example, a copolymer comprising an ester of (meta)acrylate and alcohol including an alkyl group having 1 to 20 carbon atoms, an ester of (meta)acrylate and alicyclic alcohol having 3 to 14 carbon atoms, and an ester of (meta)acrylate and aromatic alcohol having 6 to 14 carbon atoms), and tackifying resins of low molecular weight having a polymerizable unsaturated bond.

### (1-7) Preferred property of ink composition

Considering the ejecting property, the viscosity of the ink composition of the present invention if applied to an inkjet recording, is preferably 7 to 30 mPa.s, more preferably 7 to 20 mPa.s at the temperature at the time of ejection. It is preferred to suitably adjust and determine the composition ratio so that the viscosity is within the above range. The viscosity of the ink composition is 35 to 500 mPa.s, preferably 35 to 200 mPa.s at room temperature (25 to 30°C). By setting a high viscosity at room temperature, even if a porous recording medium is used, it becomes possible to prevent the ink permeation into the recording medium, decrease the uncured monomer, and reduce odor. Furthermore, the dot bleeding at the time of ink droplet depositing can be suppressed, resulting in improvement in the image. If the ink viscosity at 25 to 30°C is less than 35 mPa.s, the effect of preventing the bleeding is insufficient, conversely if it is more than 500 mPa.s, problems may occur in the ink liquid delivery.

The surface tension of the ink composition of the present invention is preferably 20 to 30mN/m, more preferably 23 to 28mN/m. If recording is performed onto various recording media such as polyolefine, PET, a coated paper, and an uncoated paper, the surface tension is preferably not less than 20mN/m from the viewpoint of bleeding and permeation, and preferably not more than 30mN/m from the viewpoint of wettability.

Such adjusted ink composition of the present invention is preferably used as the inkjet recording ink. Specifically, the ink composition of the present invention is ejected onto the recording medium by an inkjet printer, and then the ejected ink composition is cured by irradiation of the radiation for recording.

Since the image area is cured by irradiation of the radiation such as ultraviolet rays, and the image area has an excellent strength, the printed material obtained by the ink can be used for various usages such as formation of an ink receiving layer (image area) of a planographic printing plate, in addition to image formation by the ink.

### (2) Inkjet recording method and inkjet recording apparatus

Next is a description of an inkjet recording method using the ink composition of the present invention, and an inkjet recording apparatus to which the recording method is applicable.

### (2-1) Inkjet recording method

One preferred embodiment of the present invention is an inkjet recording method comprising; ejecting the ink composition of the present invention onto a recording medium by an inkjet printer, and curing the ejected ink composition by irradiation of radiation.

In such an inkjet recording method of the present invention, it is preferable that the ink composition is heated to 40 to 80°C so as to decrease the viscosity of the ink composition to 7 to 30 mPa.s and then ejected. By using this method, high ejecting stability can be achieved.

The radiation curable ink composition generally has a greater viscosity than that of an aqueous ink, therefore the viscosity fluctuates a lot due to the temperature fluctuation at the time of printing. The fluctuation of the ink viscosity largely affects the droplet size and the droplet ejecting speed, causing deterioration in the image quality. Therefore, it is required to keep the ink temperature at the time of printing as constant as possible. The temperature control range of the ink composition is suitably ±5°C, preferably ±2°C, more preferably ±1°C with respect to the set temperature.

Next is a detailed description of the irradiation condition of radiation in the inkjet recording method of the present invention.

The basic irradiation method of the radiation is disclosed in Japanese Unexamined Patent Publication No. S60-132767. Specifically, it is performed by providing light sources on the both sides of a head unit ejecting the ink composition, and scanning the head unit and the light sources by the shuttle method. The radiation is irradiated after a fixed time after the ink composition is deposited onto the recording medium.

Furthermore, the curing of the ink composition may be completed by another light source without driving. Specifically, a method of using an optical fiber, and a method wherein a collimated light source is faced to a mirror surface provided on the side face of a head unit to irradiate UV light to a recording unit (area applied with the ink composition) are disclosed as an irradiation method in WO99/54415. In the present invention, such irradiation methods can be used.

In the inkjet recording method of the present invention, the radiation to be used include *α* rays, *γ* rays, X rays, ultraviolet rays, visible light, infrared light, and electron beams. The peak wavelength of the radiation depends on the absorption property of the sensitizing dye in the ink composition. However, it is suitable if this is for example, 200 to 600 nm, preferably 300 to 450 nm, and more preferably 350 to 450 nm. Moreover, (a) electron transfer type initiation system of the ink composition of the present invention has sufficient sensitivity even to radiation of low output. Therefore, the output of the radiation is suitably within an irradiation energy of for example not more than 2000 mJ/cm², preferably 10 to 2000 mJ/cm^{2,}, more preferably 20 to 1000 mJ/cm², and even more preferably 50 to 800 mJ/cm². The radiation is suitably irradiated at an exposure face illuminance (maximum illuminance on the recording medium surface) of for example 10 to 2000 mW/cm², preferably 20 to 1000 mW/cm².

In particular, the radiation irradiation of the inkjet recording method of the present invention is preferably performed by a light emitting diode that emits ultraviolet rays having an emission wavelength peak of 350nm to 420nm, more preferably 360 to 400 nm, and a maximum illuminance on the recording medium surface of 10 to 1,000 mW/cm².

In the inkjet recording method of the present invention, the ink composition that has been ejected onto the recording medium is suitably irradiated by radiation for, for example 0.01 to 120 seconds, preferably 0.1 to 90 seconds.

Furthermore, in the inkjet recording method of the present invention, it is desirable to heat the ink composition to a fixed temperature, and to set the time from when the ink composition is deposited onto the recording medium until the radiation is irradiated, to 0.01 to 0.5 seconds, preferably 0.01 to 0.3 seconds, and more preferably 0.01 to 0.15 seconds. Such a control of the time since the ink composition is deposited onto the recording medium until the radiation is irradiated within a very short time enables preventing bleeding of the deposited ink composition before being cured. Moreover, since a porous recording medium can also be exposed to light before the ink composition is permeated to the deep part where the light source can not reach, residual unreacted monomer can be reduced, resulting in odor reduction.

As described above, according to the inkjet recording method of the present invention, usage of the ink composition of the present invention enables an image with a high sensitivity, and suppression of ink bleeding and odor. As a result, with respect to various recording media having various surface wettability, the dot diameter of the deposited ink can be kept constant and the image quality is improved. In particular, if the viscosity of the ink composition is 35 to 500MP.s at 25°C, a large effect can be obtained.

As a result, an excellent image quality is provided to a printed material (printed material of the present invention) formed by the inkjet recording method of the present invention, that is a printed material where the ink composition of the present invention is ejected by an inkjet printer onto the recording medium, and then the ink composition is cured by irradiation of radiation.

In order to obtain a colored image using the inkjet recording method of the present invention, it is preferable to superpose inks in the order from less bright color to brighter color. By superposing inks in the order from less bright color to brighter color, the radiation can readily reach to the ink at the bottom, and excellent curable sensitivity, reduction in residual monomer, odor reduction, and improvement in adhesiveness can be expected. In the irradiation of the radiation, all colors can be ejected and exposed to light all in at once, however each color is preferably exposed to light one by one from the viewpoint of accelerating the curing.

### (2-2) Inkjet recording apparatus

The inkjet recording apparatus used in the present invention is not specifically limited, and a commercially available inkjet recording apparatus can be used. That is, in the present invention, the recording can be performed using a commercially available inkjet recording apparatus.

As such an inkjet recording apparatus, those including for example an ink supply system, a temperature sensor, and a radiation source are used.

The ink supply system comprises, for example: a source tank including the inkjet recording ink of the present invention; supply piping; an ink supply tank immediately in front of an inkjet head; a filter; and a piezo type inkjet head. The piezo type inkjet head can be driven so that multisize dots of 1 to 100 pl, preferably 8 to 30 pl can be ejected with a resolution of for example 320 x 320 to 4000 x 4000 dpi, and preferably 400 x 400 to 2400 x 2400 dpi. In the present invention dpi denotes the number of dots per 2.54 cm.

As described above, since the ejected radiation curable ink such as the ink composition of the present invention is desirably kept at a fixed temperature, heat insulation and heating are preferably performed in the part from the ink supply tank to the inkjet head. The method of controlling the temperature is not specifically limited, however for example, it is preferable to provide a plurality of temperature sensors in the respective piping sites so as to control the heating according to the ink flow rate and the environmental temperature. The temperature sensor can be provided in the vicinity of the ink supply tank and the nozzle of the inkjet head. The head unit to be heated is preferably thermally blocked or insulated so that the main body of the apparatus is not affected by the outside temperature. In order to shorten the printer start-up time required for heating, or to reduce the heat energy loss, it is preferable to thermally insulate from the other parts and decrease the overall heat capacity of the heating unit.

As the radiation source, a mercury-vapor lamp or a gas/solid state laser are mainly used. For the ultraviolet ray curable inkjet, a mercury-vapor lamp and a metal halide lamp are widely known. However, presently, a mercury-free lamp is strongly desired from the viewpoint of environmental protection, and it is industrially and environmentally very useful to replace it by a GaN semiconductor ultraviolet light emitting device [UV-LED]. Furthermore, the LED (UV-LED) and LD (UV-LD) has small size, long life, high efficiency, and low cost, which is expected for a light source for a light curable inkjet.

Moreover, as described above, the light emitting diode (LED) and the laser diode (LD) can be used as an radiation source. In particular, if an ultraviolet source is required, a UV-LED and a UV-LD can be used. For example, Nichia Corporation has brought into the market a purple LED having the wavelength of the main emission spectrum between 365 nm and 420 nm. If a still shorter wavelength is required, an LED emitting radiation having the wavelength center between 300 nm and 370 nm is disclosed in U.S. Patent No. 6084250. Moreover, other UV-LEDs are available, and radiation having different ultraviolet bands can be irradiated. A particularly preferred radiation source in the present invention is a UV-LED, and more particularly preferred is a UV-LED having a peak wavelength at 350 to 420 nm.

### (2-3) Recording medium

The recording medium to which the ink composition of the present invention can be applied is not specifically limited, and papers such as a normal uncoated paper and a coated paper, various nonabsorbable resin materials used for so-called soft packaging, or a resin film thereof formed into a film shape may be used. Examples of various plastic films include a PET film, an OPS film, an OPP film, an Ony film, a PVC film, a PE film, and a TAC film. Other plastics that can be used as material of the recording medium include polycarbonate, acrylic resin, ABS, polyacetal, PVA, and rubbers. Moreover, metals or glasses may be used as the recording medium.

If a material with less heat shrinkage on curing is selected for the ink composition of the present invention, the adhesiveness of the cured ink composition onto the recording medium becomes excellent, providing an advantage of being capable of forming a very fine image even on a film that is easily curled or deformed by ink shrinkage on curing or heating during the curing reaction, such as a PET film, an OPS film, an OPP film, an Ony film, and a PVC film that can be shrunk by heat.

### (3) Planographic printing plate

Preferred applications of the ink composition of the present invention include usage for a planographic printing plate.

The planographic printing plate is formed by ejecting the ink composition of the present invention onto a hydrophilic recording medium by an inkjet recording apparatus or the like, and then curing the ink composition by irradiation of the radiation so as to form a hydrophobic area. As a result, a hydrophobic ink receiving area is formed in the form of an image on the surface of the hydrophilic support. If the ink and an aqueous component are supplied thereto, the aqueous component is held in the area of the exposed hydrophilic support, and the ink is held in the hydrophobic area, so that the printing process can be directly performed thereafter.

Since the ink composition of the present invention shows excellent curability by the irradiation of radiation, the planographic printing plate of the present invention applied therewith has excellent printing durability and an excellent quality image area.

Moreover, using the inkjet recording method (inkjet recording apparatus), an image area of a very fine planographic printing plate can be formed directly from digital data. In the inkjet recording method (inkjet recording apparatus) for producing the planographic printing plate, the abovementioned conditions for the inkjet recording method of the present invention, and the inkjet recording apparatus, can be applied.

For the ink composition used for producing the planographic printing plate, the abovementioned ink composition of the present invention may be applied as it is.

### [Support]

Here is a description of a support that can be preferably used for producing the planographic printing plate of the present invention.

The support used for the planographic printing plate of the present invention is not particularly limited as long as it is a dimensionally stable plate-like material. If the material constituting the support is hydrophilic, it can be used as it is. Moreover, the surface of the plate-like material constituting the support can be also hydrophilized.

Examples of the material constituting the support include a paper, a paper laminated with a plastic (such as polyethylene, polypropylene, and polystyrene), a metal plate (such as aluminum, zinc, and copper), a plastic film (such as cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, and polyvinylacetal), and a paper and a plastic film on which the abovementioned metals are laminated or deposited. Preferred examples of the support include a polyester film and an aluminum plate. Among these, preferred is an aluminum plate having excellent dimensional stability and relatively low cost.

The aluminum plate is a pure aluminum plate, an alloy plate having aluminum as the main component containing a small amount of different components, or an aluminum or aluminum alloy thin film laminated with plastics. Examples of different components contained in the aluminum alloy include silicon, iron, manganese, copper, magnesium, chromium, zinc, bismuth, nickel, and titanium. The content of the different components in the alloy is preferably not more than 10 mass %. In the present invention, a pure aluminum plate is preferred. However, since it is difficult to produce completely pure aluminum in terms of the refining technique, a small amount of different components may be contained. The composition of the aluminum plate is not specified and well-known materials can be suitably used.

The thickness of the support is preferably 0.1 to 0.6 mm, more preferably 0.15 to 0.4 mm.

Prior to using the aluminum plate, it is preferred to apply surface treatments such as surface roughening and anodic oxidation. Such surface treatments facilitate improving the hydrophilicity and ensuring the adhesiveness of the image recording layer and the support. Prior to the surface roughening of the aluminum plate, a degreasing treatment for removing rolling oil on the surface using, for example, a surfactant, an organic solvent or an alkaline aqueous solution is performed.

The surface roughening of the aluminum plate is performed by various methods, such as mechanical surface roughening, electrochemical surface roughening (surface roughening in which the surface is electrochemically dissolved), and chemical surface roughening (surface roughening in which the surface is chemically selectively dissolved).

As the method of mechanical surface roughening, well-known methods such as a ball polishing method, a brush polishing method, a blast polishing method, and a buff polishing method may be used. Moreover, in the step for rolling the aluminum, a transcriptional method in which a rugged shape is transcripted using a rugged roller may be used.

Examples of the method of electrochemical surface roughening include a method performed by alternating current or direct current in an electrolyte containing acids such as hydrochloric acid and nitric acid. Moreover, examples thereof include a method using mixed acid described in Japanese Unexamined Patent Publication No. S54-63902.

After the surface-roughening, the aluminum plate is subjected to alkali etching using an aqueous solution such as potassium hydroxide and sodium hydroxide as necessary. Furthermore, after the neutralization treatment, an anodic oxidation is performed so as to improve the abrasion resistance as desired.

In the anodic oxidation of the aluminum plate, any eletrolyte may be used, as long as it can form a porous oxide coating. Generally used are, for instance, sulfuric acid, hydrochloric acid, oxalic acid, chromic acid and mixtures thereof. The concentration of these electrolytes is suitably selected depending on the types of electrolytes.

Since the conditions for the anodic oxidation variously vary depending on the types of electrolytes used, it can not be indiscriminately specified. However in general, it is preferable that the electrolyte concentration is 1 to 80% weight, the electrolyte temperature is 5 to 70°C, the current density is 60A/dm², the electric voltage is 1 to 100 V, and the electrolysis time is 10 seconds to 50 minutes. The amount of the anodic oxide coating formed is preferably 1.0 to 5.0 g/m², and more preferably 1.5 to 4.0 g/m². Within such a range, excellent printing durability and excellent scratch resistance in the non-image area of the planographic printing plate may be obtained.

The support used in the present invention may be a substrate as is, that has been surface treated and has an anodic oxide coating. However, an expansion treatment or sealing of microspores in the anodic oxide coating described in Japanese Unexamined Patent Publication No. 2001-253181 and Japanese Unexamined Patent Publication No. 2001-32236, and a surface hydrophilizing in which the substrate is soaked in an aqueous solution containing hydrophilic compounds may be suitably selected and performed as necessary, in order to further improve the adhesiveness with the top layer, hydrophilicity, fouling resistance, and thermal insulation properties. Of course, the expansion treatment and sealing are not limited to those described above, and any well-known method may be performed.

### [Sealing]

Possible examples of the sealing besides vapor sealing include sealing by an aqueous solution containing inorganic fluorine compounds such as treatment using zirconate fluoride only, treatment by sodium fluoride, vapor sealing by adding lithium chloride, and sealing by hot water.

Among these, preferred are sealing by an aqueous solution containing inorganic fluorine compounds, sealing by vapor, and sealing by hot water.

### [Hydrophilizing]

Examples of the hydrophilizing used in the present invention include an alkali metal silicate method described in U.S. Patent Nos. 2714066, 3181461, 3280734, and 3902734. In the method, the support is soaked in an aqueous solution such as sodium silicate, or electrolyzed. Other examples include a method of treatment using potassium zirconate fluoride described in Japanese Examined Patent Publication No. S36-22063, and a method of treatment using polyvinylsulfonic acid described in U.S. Patent Nos. 3276868, 4153461, and 4689272.

The central line average roughness of the support of the present invention is preferably 0.10 to 1.2 µm. Within this range, excellent adhesiveness with the image recording layer, excellent printing durability, and excellent fouling resistance can be obtained.

### EXAMPLES

Hereunder is a specific description of the present invention with reference to the following examples. However, the present invention is not limited to the forms of the examples.

### <Preparation of colorant dispersion>

According to the method described below, the dispersion of respective colors were prepared using the respective pigments of yellow, magenta, cyan, and black. Each pigment was dispersed using a dispersing polymer to make a pigment dispersion. The dispersion condition was suitably adjusted by a publicly known dispersing device (paint shaker) so that the average particle diameter of each pigment particles was within a range of 0.2 to 0.3 µm. Then, heating and filtration were performed for preparation.

### (Yellow colorant dispersion A1)

| | |
|---|---|
| C.I. pigment yellow 12 | 10 mass parts |
| Dispersing polymer (SOLSPERSE® series made by Zeneca Co) | 5 mass parts |
| Stearylacrylate | 85 mass parts |
| (Magenta colorant dispersion A1) | |
| C.I. pigment red 57:1 | 15 mass parts |
| Dispersing polymer (SOLSPERSE® series made by Zeneca Co) | 5 mass parts |
| Stearylacrylate | 80 mass parts |
| (Magenta colorant dispersion A2) | |
| C.I. pigment red 57:1 | 15 mass parts |
| Dispersing polymer (SOLSPERSE® series | made by Zeneca Co) 5 mass parts |
| Isobornylacrylate | 80 mass parts |
| (Cyan colorant dispersion A1) | |
| C.I. pigment blue 15:3 | 20 mass parts |
| Dispersing polymer (SOLSPERSE® series made by Zeneca Co) | 5 mass parts |
| Stearylacrylate | 75 mass parts |
| (Black colorant dispersion A1) | |
| C.I. pigment black 7 | 20 mass parts |
| Dispersing polymer (SOLSPERSE® series made by Zeneca Co) | 5 mass parts |
| Stearylacrylate | 75 mass parts |

### [Example 1]

### <Preparation of inkjet recording ink>

Using each colorant dispersion A1 that had been prepared in the above manner, the inkjet recording ink of each color was prepared according to the method described below.

### (Yellow ink A1: Example A1-1)

| | |
|---|---|
| Yellow colorant dispersion 1 | 20 mass parts |
| Stearylacrylate | 60 mass parts |
| Bifunctional aromatic urethane acrylate A (molecular weight 1500) | 10 mass parts |
| Hexafunctional aliphaticurethane acrylate B (molecular weight 1500) | 5 mass parts |
| Sensitizing dye A | 1 mass part |
| Polymerization initiator B (CGI 784 made by Ciba Specialty Chemicals) | 4 mass parts |

Here, the bifunctional aromatic urethane acrylate A (molecular weight 1500) is:
The termini of bifunctional aromatic urethane acrylate A 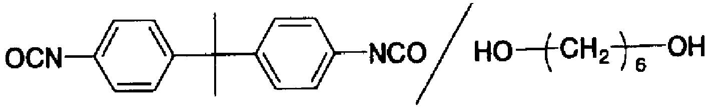 condensate (Mw 1500) are capped with 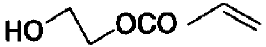 and the hexafunctional aliphaticurethane acrylate B (molecular weight 1500) is:
The termini of hexafunctional aliphaticurethane acrylate B 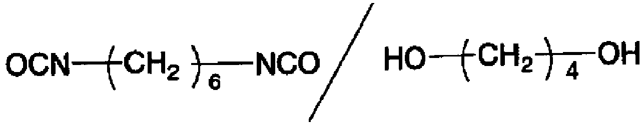 condensate (Mw 1500) are capped with

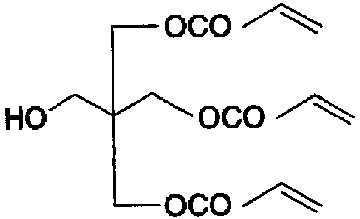

The sensitizing dye A is:

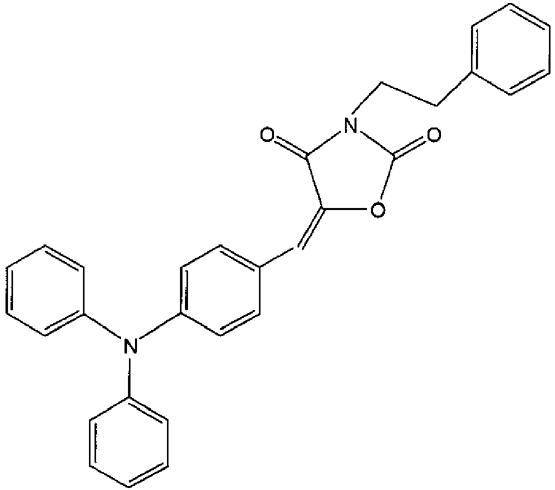

### (Magenta ink A1: Example A1-2)

| | |
|---|---|
| Magenta colorant dispersion 1 | 20 mass parts |
| Stearylacrylate | 60 mass parts |
| Bifunctional aromatic urethane acrylate A (molecular weight 1500) | 10 mass parts |
| Hexafunctional aliphaticurethane acrylate B (molecular weight 1000) | 5 mass parts |
| Sensitizing dye B | 1 mass part |
| Polymerization initiator (LD-5) | 3 mass parts |
| Cosensitizer A | 1 mass part |

Here, the sensitizing dye B is:

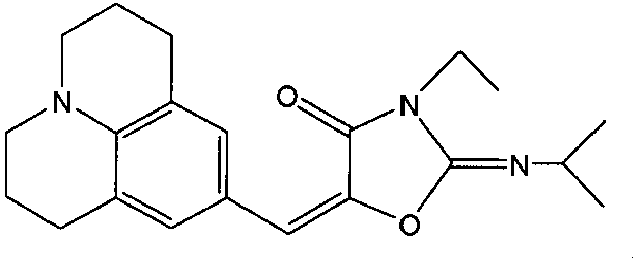

The polymerization initiator (LD-5) is:

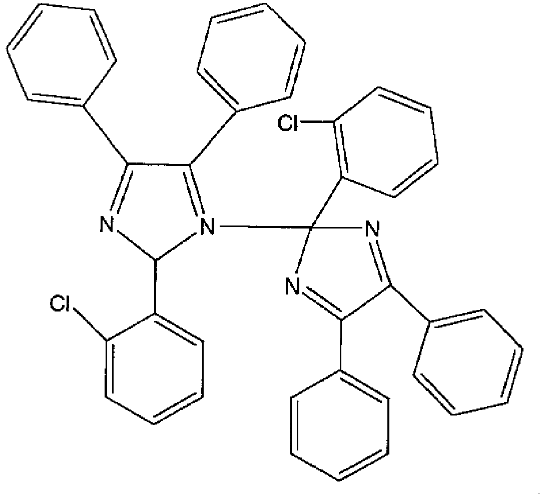

The cosensitizer A is:

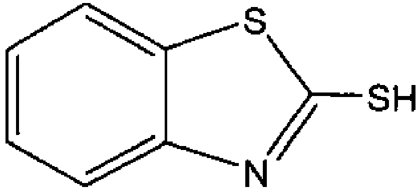

### (Cyan ink A1: Example A1-3) (Reference - not part of the claimed invention)

| | |
|---|---|
| Cyan colorant dispersion 1 | 15 mass parts |
| Stearylacrylate | 60 mass parts |
| Bifunctional aromatic urethane acrylate A (molecular weight 1500) | 10 mass parts |
| Hexafunctional aliphaticurethane acrylate B (molecular weight 1000) | 5 mass parts |
| Sensitizing dye C | 1 mass part |
| Polymerization initiator A | 4 mass parts |

Here, the sensitizing dye C is: 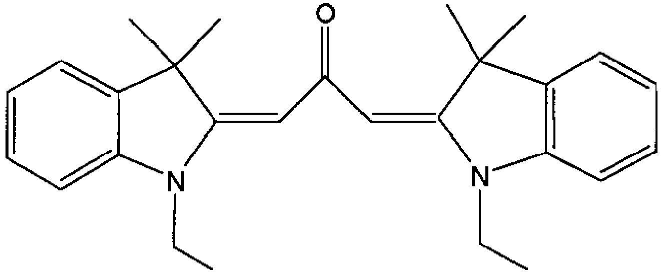 and the polymerization initiator A is:

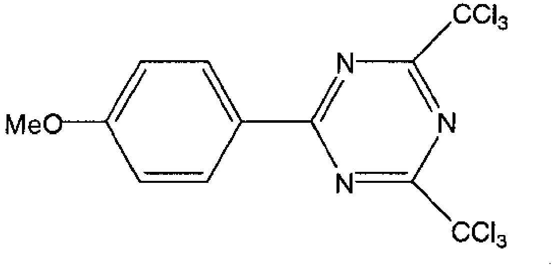

### (Black ink A1: Example A1-4) (Reference - not part of the claimed invention)

| | |
|---|---|
| Black colorant dispersion 1 | 15 mass parts |
| Stearylacrylate | 60 mass parts |
| Bifunctional aromatic urethane acrylate A (molecular weight 1500) | 10 mass parts |
| Hexafunctional aliphaticurethane acrylate B (molecular weight 1000) | 5 mass parts |
| Sensitizing dye D | 1 mass part |
| Polymerization initiator (CGI 784 made by Ciba Specialty Chemicals) | 4 mass parts |

Here, the sensitizing dye D is:

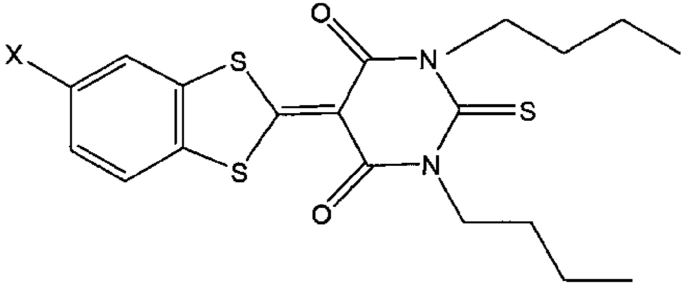

The crude ink A1 of each color that had been prepared in the above manner was filtrated by a filter having an absolute filtration accuracy of 2 µm, to give the ink A1 of each color.

### [Examples A2 to A5]

### <Preparation of ink>

Using magenta colorant dispersions A1 and A2, the magenta inks A2 to A5 were prepared according to the method described below.

### (Magenta ink A2: Example A2)

| | |
|---|---|
| Magenta colorant dispersion 1 | 20 mass parts |
| Isobornylacrylate | 40 mass parts |
| Bifunctional aromatic urethane acrylate A (molecular weight 1500) | 10 mass parts |
| Hexafunctional aliphaticurethane acrylate B (molecular weight 1000) | 5 mass parts |
| Sensitizing dye B | 1 mass part |
| Polymerization initiator (LD-5) | 3 mass parts |
| Cosensitizer A | 1 mass part |
| (Magenta ink A3: Example A3) (Reference - not part of the claimed invention) | |
| Magenta colorant dispersion 1 | 20 mass parts |
| Isobornylacrylate | 50 mass parts |
| Lactone modified acrylate A (molecular weight 458): | 20 mass parts |
| Hexafunctional aliphaticurethane acrylate B (molecular weight 1000) | 5 mass parts |
| Sensitizing dye C | 1 mass part |
| Polymerization initiator A | 4 mass parts |

Here, the lactone modified acrylate A (molecular weight 458) is:

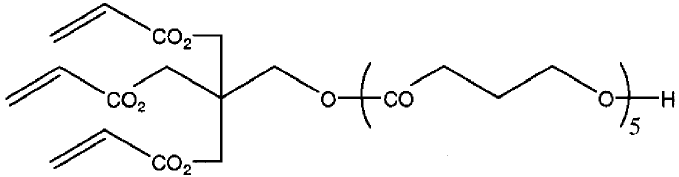

### (Magenta ink A4: Example A4) (Reference - not part of the claimed invention)

| | |
|---|---|
| Magenta colorant dispersion 2 | 20 mass parts |
| Isobornylacrylate | 70 mass parts |
| Hexafunctional aliphaticurethane acrylate B (molecular weight 1000) | 5 mass parts |
| Sensitizing dye D | 1 mass part |
| Polymerization initiator A | 2 mass parts |
| Polymerization initiator B | 2 mass parts |

Here, the polymerization initiator B is:

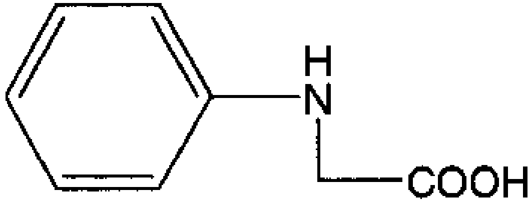

### (Magenta ink A5: Example A5) (Reference - not part of the claimed invention)

| | |
|---|---|
| Magenta colorant dispersion 2 | 20 mass parts |
| Isobornylacrylate | 60 mass parts |
| Tetramethylolmethane triacrylate | 15 mass parts |
| Sensitizing dye E | 1 mass part |
| Polymerization initiator B | 4 mass parts |

Here, the sensitizing dye E is:

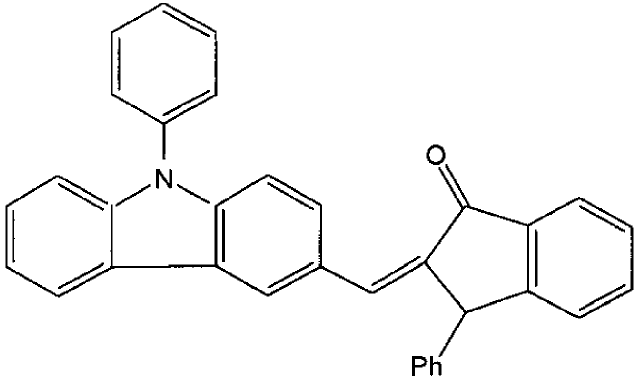

### [Comparative Examples A1 to A2]

### <Preparation of ink>

Magenta inks A6 and A7 were prepared according to the method described below.

### (Magenta ink A6: Comparative Example A1)

| | |
|---|---|
| Magenta colorant dispersion 1 | 20 mass parts |
| Stearylacrylate | 60 mass parts |
| Bifunctional aromatic urethane acrylate A (molecular weight 1500) | 10 mass parts |
| Hexafunctional aliphaticurethane acrylate B (molecular weight 1000) | 5 mass parts |
| Polymerization initiator (IRGACURE® 184 made by Ciba Specialty | Chemicals) 5 mass parts |
| (Magenta ink A7: Comparative Example A2) | |
| Magenta colorant dispersion 2 | 20 mass parts |
| Isobornylacrylate | 70 mass parts |
| Hexafunctional aliphaticurethane acrylate B (molecular weight 1000) | 5 mass parts |
| Polymerization initiator (IRGACURE® 184 made by Ciba Specialty | Chemicals) 5 mass parts |

In the ink composition made in the above Examples and Comparative Examples, the ink viscosity at the ejection temperature was within a range of 7 to 20 mPa.s.

### <Inkjet image recording>

Image printing was performed using the ink of the Examples, Reference Examples and Comparative Examples prepared as above.

The image printing was performed by recording onto a support (recording medium) using a commercial inkjet recording apparatus having a piezo type inkjet nozzle.

As the support used (recording medium), a grained aluminum support, a biaxial oriented transparent polypropylene film that was surface treated to give printability, a soft polyvinyl chloride sheet, a cast coated paper, and a commercial recycled paper were used.

The ink supply system of the inkjet recording apparatus comprises; a source tank, supply piping, an ink supply tank immediately in front of an inkjet head, a filter, and a piezo type inkjet head. The heat insulation and heating were performed in the part from the ink supply tank to the inkjet head. The temperature sensors were respectively provided in the vicinity of the ink supply tank and the nozzle of the inkjet head to perform temperature control so that the nozzle part was always at 70°C±2°C. The piezo type inkjet head was driven so that multisize dots of 8 to 30 pl could be ejected with a resolution of 720 x 720 dpi. After deposiing, the first scanning speed and the emission frequency were adjusted so that the UV-LED rays having a peak wavelength at 395 nm were focussed to give an exposure illuminance of 100 mW/cm², and the irradiation was started after 0.1 second after the ink had been deposited onto the recording medium. Moreover, the exposure time was variable to irradiate the exposure energy. In the present invention dpi denotes the number of dots per 2.54 cm.

The ink of the Examples, Reference Examples and Comparative Examples was respectively ejected at an environmental temperature of 25°C, and the UV-LED rays were irradiated. In Examples A1-1 to A1-4, the ejection was performed in the order of black, cyan, magenta, and yellow, and the UV-LED rays were irradiated for each color (this whole procedure is called Example A1). As the energy for completely curing, so as to eliminate the cohesiveness in a touching test, light exposure was performed such that the total exposure energy per one color was uniformly 300 mJ/cm².

### <Evaluation of inkjet image>

According to the method described below, the formed images were respectively evaluated in terms of sensitivity required for curing, permeability in a commercial recycled paper, ink bleeding in a grained aluminum support, adhesiveness, printing durability, and storage stability.

### (Evaluation of curing sensitivity)

The amount of the exposure energy (mJ/cm²) providing no stickiness on the image surface after ultraviolet ray irradiation was defined as the curing sensitivity. The lower value means a higher sensitivity.

### (Evaluation of permeability onto commercial recycled paper)

The permeability of an image printed onto a commercial recycled paper was evaluated according to the following standard.
a: almost no permeation, no odor of residual monomer
b: a little permeation, a little odor of residual monomer
c: apparent permeation of ink to the backside, strong odor of residual monomer

### (Evaluation of ink bleeding on grained aluminum support)

The ink bleeding of an image printed onto a grained aluminum support was evaluated according to the following standard.
a: no bleeding between adjacent dots
b: a little bleeding of dots
c: visibly blurred image due to bleeding of dots

### (Evaluation of adhesiveness on grained aluminum support)

Regarding the printed image made in the above manner, a sample without any scratches on the printed surface, and a sample with 11 x 11 vertical and horizontal cuts at intervals of 1 mm on the printed surface having 100 grids of 1mm² was made according to JISK 5400. SELLOTAPE® was respectively attached onto the printed surfaces and quickly peeled off at an angle of 90 degrees. The condition of the remaining printed image and grids was evaluated according to the following standard.
a: no peel of printed image in the grid test
b: a little peel of printed image in the grid test, but no peel on the ink surface without scratches
c: both were easily peeled off by SELLOTAPE®.

### (Evaluation of printing durability)

The image printed onto the grained aluminum support made in the above manner was used as the printing plate, on which printing was performed by a Heider KOR-D. The number of finished printouts was compared as an index of the printing durability (Example A1 was set to 100). The greater value means higher printing durability and is more preferable.

### (Evaluation of storage stability)

The prepared ink was stored in 75% RH at 60°C for 3 days, and then the ink viscosity at the injection temperature was measured. The increment of the ink viscosity was shown as the viscosity ratio of after storage/before storage. The storage stability was determined excellent if the viscosity was not changed and the ratio was closer to 1.0, and good if the ratio was less than 1.5.

The evaluation results are shown in Table A-1.

**Table A-1**

| | Ink No. | Curing sensitivity (mJ/cm²) | Permeability | Ink bleeding | Adhesiveness | Printing durability | Storage stability |
|---|---|---|---|---|---|---|---|
| Example A1 | A1 | 100 | a | a | a | 100 | 1.1 |
| Example A2 | A2 | 100 | a | a | a | 120 | 1.2 |
| Example A3* | A3 | 130 | a | a | a | 110 | 1.1 |
| Example A4* | A4 | 120 | a | a | a | 120 | 1.2 |
| Example A5* | A5 | 130 | a | a | a | 100 | 1.1 |
| Comparative Example A1 | A6 | 200 | c | c | c | 50 | 1.6 |
| Comparative Example A2 | A7 | 200 | b | b | b | 80 | 1.5 |

| | | | | | | | |
|---|---|---|---|---|---|---|---|
| * Reference Example - not part of the claimed invention | | | | | | | |

From Table A1, it was found that the ink compositions using specific sensitizing dyes in the first mode of the present invention had a high sensitivity to the irradiation of radiation, a capability of forming a high quality image onto a paper, an excellent storage stability, and a capability of forming a high quality image with a high printing durability even if used for producing a printing plate.

In particular, in Example A1 where the inks of Examples A1-1 to A1-4 were combined, all colors provided an image of high resolution without dot bleeding. Furthermore, on a wood free paper, the ink did not penetrate to the backside and the ink was sufficiently cured with almost no odor due to the unreacted monomer. Moreover, the ink recorded onto the film had a sufficient flexibility. Even if the film was bent, no cracking occurred in the ink and there was no problem in the adhesiveness test by SELLOTAPE® peeling.

The present invention provides an inkjet recording ink which has a high sensitivity to radiation of short wavelength having a peak wavelength of for example 350 to 450 nm, a capability of forming a high quality image, and an excellent storage stability. Moreover, the present invention provides a method of producing a planographic printing plate which does not require development processing, with a high printing durability, and a capability of forming a high quality image.

Furthermore, the present invention provides an ink composition which is curable with a high sensitivity to radiation irradiation, and is capable of forming a high quality image having excellent adhesiveness onto a recording medium, and excellent storage stability, an inkjet recording method using the ink composition, and a printed material obtained by the inkjet recording method.

Furthermore, the present invention provides a planographic printing plate with a high printing durability obtained by using the ink composition, and a method of producing the planographic printing plate.

## Claims

1. An inkjet recording ink which is curable by radiation irradiation, comprising a colorant, a polymerizable compound, and a polymerization initiation system,
wherein said polymerization initiation system contains a sensitizing dye comprising one or more compounds selected from the group consisting of compounds represented by the following formula (XVIII), and a polymerization initiator: 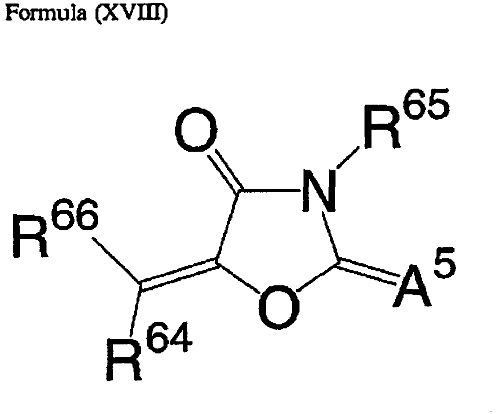 wherein in formula (XVIII), R⁶⁶ represents **an aromatic** ring or a heterocyclic **ring;** A⁵ represents O, S, or NR⁶⁷; and R⁶⁴, R⁶⁵, and R⁶⁷ each independently represent a monovalent nonmetal atomic group selected from a hydrogen atom, a substituted or unsubstituted alkyl group, a substituted or unsubstituted alkenyl group, a substituted or unsubstituted aryl group, a substituted or unsubstituted heteroaromatic residue, a substituted or unsubstituted alkoxy group, a substituted or unsubstituted alkylthio group, a hydroxyl group, and a halogen atom, or R⁶⁴ and R⁶⁷, or R⁶⁵ and R⁶⁷ are nonmetal atomic groups that are bonded to each other to from an aliphatic or an aromatic ring.

2. A method for forming an image on a support, comprising:
(a) applying the inkjet recording ink according to claim 1 onto said support; and
(b) curing said inkjet recording ink by irradiating said inkjet recording ink with radiation having a peak wavelength of 350 to 420 nm with an irradiation energy of not more than 2000 mJ/cm², to thereby form an image made from the cured ink on said support.

3. A method according to claim 2, wherein the sensitizing dye contained in said inkjet recording ink has an absorption maximum value in a range of 350 to 420 nm.

4. A method of producing a planographic printing plate having a support and an image formed on said support, the method comprising:
(1) ejecting the inkjet recording ink according to claim 1 onto said support; and
(2) curing said ink by irradiating radiation on the support having said ink ejected thereon to form an image made from the cured ink on said support.

5. An ink jet recording ink according to claim 1, wherein said colorant is a pigment or an oil soluble dye.

6. An ink jet recording ink according to claim 5, wherein an oxidation potential of said oil soluble dye is higher than 1.0V (vsSCE).

7. An inkjet recording method comprising: ejecting the ink jet recording ink according to claim 1 onto a recording medium by an inkjet printer, and curing the ejected ink composition by irradiation of radiation
wherein the radiation irradiation is performed by a light emitting diode that emits ultraviolet rays having an emission wavelength peak of 350 to 420 nm, and a maximum illuminance on said recording medium surface of 10 to 1,000 mW/cm².

8. A printed material produced by ejecting the ink jet recording ink according to onto a recording medium by an inkjet printer, and then curing said ink composition by irradiation of radiation.

9. A method of producing a planographic printing plate according to claim 4 comprising: ejecting the ink jet recording ink according to claim 1 onto a hydrophilic support, and then curing said ink composition by irradiation of radiation so as to form a hydrophobic area.

10. A planographic printing plate having a hydrophobic area formed by ejecting the ink jet recording ink according to claim 1 onto a hydrophilic support, and then curing said ink composition by irradiation of radiation.

## Patentansprüche

1. Tinte für die Tintenstrahlaufzeichnung, die in der Lage ist, durch Einstrahlung von Strahlung gehärtet zu werden, umfassend ein Färbemittel, eine polymerisierbare Verbindung und ein Polymerisations-Initiationssystem,
worin das Polymerisations-Initiationssystem einen Sensibilisierungsfarbstoff, der eine oder mehrere Verbindungen umfasst, ausgewählt aus der Gruppe, bestehend aus Verbindungen, die durch die folgende Formel (XVIII) dargestellt werden, und einen Polymerisationsinitiator enthält: 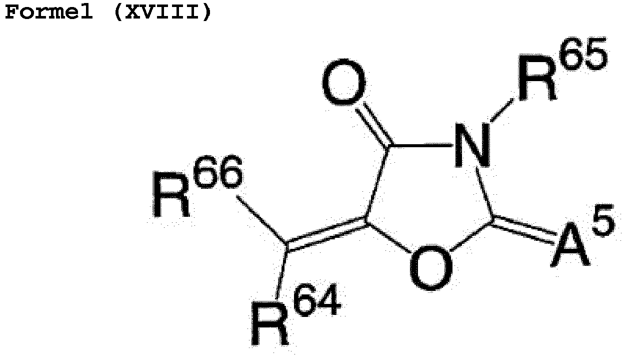 worin in der Formel (XVIII) R⁶⁶ einen aromatischen Ring oder einen heterocyclischen Ring darstellt; A⁵ O, S oder NR⁶⁷ darstellt; und R⁶⁴, R⁶⁵ und R⁶⁷ jeweils unabhängig eine monovalente, nicht-metallische Atomgruppe darstellen, ausgewählt aus einem Wasserstoffatom, einer substituierten oder unsubstituierten Alkylgruppe, einer substituierten oder unsubstituierten Alkenylgruppe, einer substituierten oder unsubstituierten Arylgruppe, einem substituierten oder unsubstituierten heteroaromatischen Rest, einer substituierten oder unsubstituierten Alkoxygruppe, einer substituierten oder unsubstituierten Alkylthiogruppe, einer Hydroxylgruppe und einem Halogenatom, oder R⁶⁴ und R⁶⁷ oder R⁶⁵ und R⁶⁷ nicht-metallische Atomgruppen darstellen, die mit einander verbunden sind, um einen aliphatischen oder einen aromatischen Ring zu bilden.

2. Verfahren zum Bilden eines Bildes auf einem Träger, umfassend:
(a) Auftragen der Tinte für die Tintenstrahlaufzeichnung gemäß Anspruch 1 auf den Träger; und
(b) Härten der Tinte für die Tintenstrahlaufzeichnung durch Bestrahlung der Tinte für die Tintenstrahlaufzeichnung mit Strahlung mit einer Peak-Wellenlänge von 350 bis 420 nm mit einer Bestrahlungsenergie von nicht mehr als 2.000 mJ/cm², um hierdurch ein Bild aus der gehärteten Tinte auf dem Träger zu bilden.

3. Verfahren gemäß Anspruch 2, worin der in der Tinte für die Tintenstrahlaufzeichnung enthaltene Sensibilisierungsfarbstoff einen Absorptions-Maximalwert im Bereich von 350 bis 420 nm aufweist.

4. Verfahren zur Herstellung einer Flachdruckplatte, die einen Träger und ein Bild, gebildet auf dem Träger, aufweist, wobei das Verfahren umfasst:
(1) Ausstoßen der Tinte für die Tintenstrahlaufzeichnung gemäß Anspruch 1 auf den Träger; und
(2) Härten der Tinte durch Einstrahlen von Strahlung auf den Träger, der hierauf die ausgestoßene Tinte aufweist, um ein Bild aus der gehärteten Tinte auf dem Träger zu bilden.

5. Tinte für die Tintenstrahlaufzeichnung gemäß Anspruch 1, worin das Färbemittel ein Pigment oder ein öllöslicher Farbstoff ist.

6. Tinte für die Tintenstrahlaufzeichnung gemäß Anspruch 5, worin das Oxidationspotential des öllöslichen Farbstoffs höher als 1,0 V (gegenüber gesättigter Kalomelelektrode) beträgt.

7. Tintenstrahl-Aufzeichnungsverfahren, umfassend:
Ausstoßen der Tinte für die Tintenstrahlaufzeichnung gemäß Anspruch 1 auf ein Aufzeichnungsmedium mit einem Tintenstrahldrucker, und Härten der ausgestoßenen Tintenzusammensetzung durch Einstrahlen von Strahlung, worin die Einstrahlung von Strahlung durch eine lichtemittierende Diode durchgeführt wird, die UV-Strahlen mit einem Emissions-Wellenlängenpeak von 350 bis 420 nm emittiert, und wobei die maximale Beleuchtungsintensität auf der Oberfläche des Aufzeichnungsmediums 10 bis 1.000 mW/cm² beträgt.

8. Drucksache, hergestellt durch Ausstoßen der Tinte für die Tintenstrahlaufzeichnung gemäß Anspruch 1 auf ein Aufzeichnungsmedium mit einem Tintenstrahldrucker, und dann Härten der Tintenzusammensetzung durch Einstrahlen von Strahlung.

9. Verfahren zur Herstellung einer Flachdruckplatte gemäß Anspruch 4, umfassend: Ausstoßen der Tinte für die Tintenstrahlaufzeichnung gemäß Anspruch 1 auf einen hydrophilen Träger, und dann Härten der Tintenzusammensetzung durch Einstrahlen von Strahlung, um so einen hydrophoben Bereich zu bilden.

10. Flachdruckplatte, die einen hydrophoben Bereich aufweist, gebildet durch Ausstoßen der Tinte für die Tintenstrahlaufzeichnung gemäß Anspruch 1 auf einen hydrophilen Träger und dann Härten der Tintenzusammensetzung durch Einstrahlen von Strahlung.

## Revendications

1. Encre d'enregistrement par jet d'encre qui est durcissable par irradiation d'un rayonnement, comprenant un colorant, un composé polymérisable, et un système d'initiation de polymérisation,
dans laquelle ledit système d'initiation de polymérisation contient un colorant de sensibilisation comprenant un ou plusieurs composés sélectionnés dans le groupe constitué des composés représentés par la formule (XVIII) suivante, et un initiateur de polymérisation : 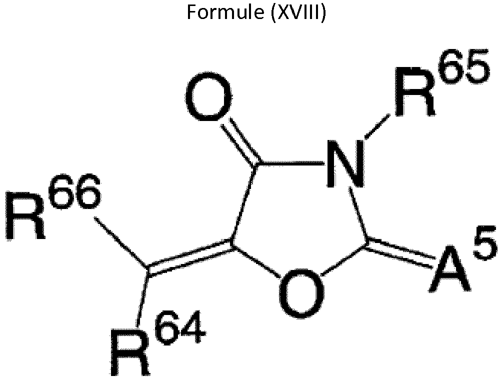 dans laquelle dans la formule (XVIII), R⁶⁶ représente un cycle aromatique ou un cycle hétérocyclique ; A⁵ représente O, S, ou NR⁶⁷ ; et R⁶⁴, R⁶⁵, et R⁶⁷ représentent chacun indépendamment un groupe atomique non métallique monovalent sélectionné parmi un atome d'hydrogène, un groupe alkyle substitué ou non substitué, un groupe alcényle substitué ou non substitué, un groupe aryle substitué ou non substitué, un résidu hétéroaromatique substitué ou non substitué, un groupe alcoxy substitué ou non substitué, un groupe alkylthio substitué ou non substitué, un groupe hydroxyle, et un atome d'halogène, ou R⁶⁴ et R⁶⁷, ou R⁶⁵ et R⁶⁷ sont des groupes atomiques non métalliques qui sont liés l'un à l'autre pour former un cycle aliphatique ou aromatique.

2. Procédé de formation d'une image sur un support, comprenant :
(a) l'application de l'encre d'enregistrement par jet d'encre selon la revendication 1 sur ledit support ; et
(b) le durcissement de ladite encre d'enregistrement par jet d'encre par l'irradiation de ladite encre d'enregistrement par jet d'encre avec un rayonnement présentant une longueur d'onde maximale de 350 à 420 nm avec une énergie d'irradiation d'au plus 2000 mJ/cm², pour ainsi former une image faite à partir de l'encre durcie sur ledit support.

3. Procédé selon la revendication 2, dans lequel le colorant de sensibilisation contenu dans ladite encre d'enregistrement par jet d'encre présente une valeur maximale d'absorption située dans une plage allant de 350 à 420 nm.

4. Procédé de production d'une plaque d'impression planographique ayant un support et une image formée sur ledit support, le procédé comprenant :
(1) l'éjection de l'encre d'enregistrement par jet d'encre selon la revendication 1 sur ledit support ; et
(2) le durcissement de ladite encre par l'irradiation d'un rayonnement sur le support sur lequel ladite encre a été éjectée pour former une image faite de l'encre durcie sur ledit support.

5. Encre d'enregistrement par jet d'encre selon la revendication 1, dans laquelle ledit colorant est un pigment ou un colorant oléosoluble.

6. Encre d'enregistrement par jet d'encre selon la revendication 5, dans laquelle un potentiel d'oxydation dudit colorant oléosoluble est supérieur à 1,0 V (par rapport à ECS).

7. Procédé d'enregistrement par jet d'encre comprenant : l'éjection de l'encre d'enregistrement par jet d'encre selon la revendication 1 sur un support d'enregistrement par une imprimante à jet d'encre, et le durcissement de la composition d'encre éjectée par l'irradiation d'un rayonnement,
dans lequel l'irradiation d'un rayonnement est réalisée par une diode émettrice de lumière qui émet des rayons ultraviolets présentant un maximum de longueur d'onde d'émission de 350 à 420 nm, et un éclairement maximal sur ladite surface du support d'enregistrement de 10 à 1000 mW/cm².

8. Matériau imprimé produit par l'éjection de l'encre d'enregistrement par jet d'encre selon la revendication 1 sur un support d'enregistrement par une imprimante à jet d'encre, et ensuite le durcissement de ladite composition d'encre par l'irradiation d'un rayonnement.

9. Procédé de production d'une plaque d'impression planographique selon la revendication 4 comprenant : l'éjection de l'encre d'enregistrement par jet d'encre selon la revendication 1 sur un support hydrophile, et ensuite le durcissement de ladite composition d'encre par l'irradiation d'un rayonnement afin de former une zone hydrophobe.

10. Plaque d'impression planographique ayant une zone hydrophobe formée par l'éjection de l'encre d'enregistrement par jet d'encre selon la revendication 1 sur un support hydrophile, et ensuite le durcissement de ladite composition d'encre par l'irradiation d'un rayonnement.
